(19) Europäisches Patentamt / European Patent Office / Office européen des brevets

(11) **EP 4 479 733 B1**

(12) **EUROPÄISCHE PATENTSCHRIFT**

(45) Veröffentlichungstag und Bekanntmachung des Hinweises auf die Patenterteilung:
**06.05.2026   Patentblatt 2026/19**

(21) Anmeldenummer: **23708680.6**

(22) Anmeldetag: **13.02.2023**

(51) Internationale Patentklassifikation (IPC):
***G01N 23/2204*** *(2018.01)*

(52) Gemeinsame Patentklassifikation (CPC):
**G01N 23/2204;** G01N 2223/085; G01N 2223/307;
G01N 2223/637

(86) Internationale Anmeldenummer:
**PCT/DE2023/100119**

(87) Internationale Veröffentlichungsnummer:
**WO 2023/151760 (17.08.2023 Gazette 2023/33)**

(54) **MANIPULATORKOPF UND UNTERDRUCKSYSTEM**

MANIPULATOR HEAD AND VACUUM SYSTEM

TÊTE DE MANIPULATEUR ET SYSTÈME DE DÉPRESSION

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **14.02.2022   DE 102022103442**

(43) Veröffentlichungstag der Anmeldung:
**25.12.2024   Patentblatt 2024/52**

(73) Patentinhaber: **SPECS Surface Nano Analysis GmbH**
**13355 Berlin (DE)**

(72) Erfinder:
 • **KUNZE, Kai**
  **13355 Berlin (DE)**
 • **SCHUMACHER, David**
  **13355 Berlin (DE)**
 • **DIERSCHKE, Karsten**
  **13355 Berlin (DE)**

(74) Vertreter: **Dumlich, Heiko Alexander**
**Lab14 GmbH**
**C/o Specs Surface Nano Analysis GmbH**
**Voltastraße 5**
**13355 Berlin (DE)**

(56) Entgegenhaltungen:
**US-A1- 2012 234 082**

• **FAISAL FIRAS ET AL: "Electrifying model catalysts for understanding electrocatalytic reactions in liquid electrolytes - Supplementary Information", NATURE MATERIALS, vol. 17, no. 7, 4 June 2018 (2018-06-04), London, pages 592 - 598, XP93048770, ISSN: 1476-1122, DOI: 10.1038/ s41563-018-0088-3**
• **NOVOTNY ZBYNEK ET AL: "Probing the solid-liquid interface with tender x rays: A new ambient-pressure x-ray photoelectron spectroscopy endstation at the Swiss Light Source", REVIEW OF SCIENTIFIC INSTRUMENTS, AMERICAN INSTITUTE OF PHYSICS, 2 HUNTINGTON QUADRANGLE, MELVILLE, NY 11747, vol. 91, no. 2, 13 February 2020 (2020-02-13), XP012244727, ISSN: 0034-6748, [retrieved on 20200213], DOI: 10.1063/ 1.5128600**
• **FAISAL FIRAS ET AL: "Electrifying model catalysts for understanding electrocatalytic reactions in liquid electrolytes", NATURE MATERIALS, NATURE PUBLISHING GROUP UK, LONDON, vol. 17, no. 7, 4 June 2018 (2018-06-04), pages 592 - 598, XP036533555, ISSN: 1476-1122, [retrieved on 20180604], DOI: 10.1038/ S41563-018-0088-3**

- **FAISAL FIRAS ET AL: "Electrifying model catalysts for understanding electrocatalytic reactions in liquid electrolytes - Supplementary Information", NATURE MATERIALS, vol. 17, no. 7, 4 June 2018 (2018-06-04), London, pages 592 - 598, XP093048770, ISSN: 1476-1122, DOI: 10.1038/s41563-018-0088-3**
- **NAGASAKA MASANARI ET AL: "Development of a liquid flow cell to measure soft X-ray absorption in transmission mode: A test for liquid water", JOURNAL OF ELECTRON SPECTROSCOPY AND RELATED PHENOMENA, vol. 177, no. 2-3, 24 November 2009 (2009-11-24), NL, pages 130 - 134, XP093048756, ISSN: 0368-2048, DOI: 10.1016/j.elspec.2009.11.001**

## Beschreibung

### GEBIET DER ERFINDUNG

Die Erfindung betrifft einen Manipulatorkopf zur Verwendung in einem Unterdruckgehäuse bei Unterdruck, einen Manipulator mit dem Manipulatorkopf, ein Unterdrucksystem mit dem Manipulatorkopf, sowie ein Herstellungsverfahren für den Manipulatorkopf, ein Verfahren zum Betreiben des Unterdrucksystems und Verwendungen des Unterdrucksystems und des Verfahrens zum Betreiben des Unterdrucksytems. Insbesondere betrifft die Erfindung ein Befüllen und Entleeren einer elektrochemischen Zelle bei einem absoluten Druck von unter 600 mbar, beispielsweise von unter 400 mbar, insbesondere von 100 mbar oder weniger.

### STAND DER TECHNIK

Es ist aus der Bedienungsanleitung V. 1.0 vom 2. Juni 2020 für das Produkt O-EC-NAP Operando Electrochemical Cell von SPECS Surface Nano Analysis GmbH ein Unterdrucksystem bekannt in dem eine elektrochemische Zelle in einem Unterdruckgehäuse angeordnet ist, um bei einem Unterdruck Messungen an der elektrochemischen Zelle durchführen zu können. Die elektrochemische Zelle ist mit einem wasserbasierten Elektrolyten gefüllt, so dass Messungen an einer Probenelektrode, sowie am wasserbasierten Elektrolyten durchgeführt werden können. Um die elektrochemische Zelle von dem wasserbasierten Elektrolyten zu entleeren, ist eine Peristaltikpumpe außerhalb des Unterdruckgehäuses angeordnet, die den wasserbasierten Elektrolyten bei absoluten Drücken über 600 mbar im Unterdruckgehäuse aus der elektrochemischen Zelle pumpen kann. Zum Entleeren wird im Unterdruckgehäuse der absolute Druck erhöht, bis der wasserbasierte Elektrolyt aus der elektrochemischen Zelle abgepumpt werden kann.

WO 01/16486 A1 zeigt eine Peristaltikpumpe mit einem Pumpmechanismus innerhalb einer Vakuumkammer. Das Anordnen des Pumpmechanismus innerhalb einer Vakuumkammer verringert den Differenzdruck zwischen dem Inneren und Äußeren des Pumpkanals, wodurch Änderungen in dem eingeschlossenen Fluidvolumen minimiert werden können.

Aus US 2012/234082 A1 ist bekannt, dass Systeme und Verfahren zur Unterstützung einer Flüssigkeit gegen einen Vakuumdruck in einer Kammer die Analyse der Flüssigkeitsoberfläche mit vakuumbasierten chemischen Analysegeräten ermöglichen können. Es sind keine elektrischen oder flüssigen Verbindungen erforderlich, um die Kammerwände zu durchdringen. Die Systeme können ein Reservoir, eine Pumpe und einen Flüssigkeitsdurchflussweg umfassen. Das Reservoir enthält eine Probe in flüssiger Phase. Die Pumpe treibt einen Fluss der Probe aus dem Behälter durch den Flüssigkeitsdurchflussweg und zurück zum Behälter. Der Fluss der Probe wird im Wesentlichen nicht durch einen Druckunterschied innerhalb und außerhalb des Flüssigkeitsdurchflussweges angetrieben. Eine Öffnung im Flüssigkeitsdurchflussweg setzt einen stabilen Teil der Probe in flüssiger Phase dem Vakuumdruck in der Kammer aus. Der Radius oder die Größe der Öffnung ist kleiner als oder gleich einem kritischen Wert, der erforderlich ist, um einen Meniskus der Probe in flüssiger Phase durch Oberflächenspannung zu halten.

### BESCHREIBUNG DER ERFINDUNG

Es kann als eine Aufgabe der Erfindung gesehen werden, einen Manipulatorkopf, einen Manipulator mit dem Manipulatorkopf und ein Unterdrucksystem mit dem Manipulatorkopf, sowie ein entsprechendes Herstellungsverfahren für den Manipulatorkopf und ein Verfahren zum Betreiben des Unterdrucksystems mit dem Manipulatorkopf vorzusehen, die es ermöglichen eine elektrochemische Zelle bei Unterdruck von 600 mbar oder weniger zu betreiben und mit einem geeigneten Analysesystem dessen Eigenschaften und Verhalten zu studieren.

Gemäß einem ersten Aspekt der Erfindung ist ein Manipulatorkopf vorgesehen, der zur Verwendung in einem Unterdruckgehäuse bei Unterdruck ausgebildet ist. Der Manipulatorkopf weist eine Flüssigkeitszelle und eine Flüssigkeitspumpe auf. Die Flüssigkeitszelle hat einen Flüssigkeitszellenauslass und einen für Unterdruck ausgebildeten Innenraum, der ausgebildet ist, eine Flüssigkeit aufzunehmen. Die Flüssigkeitspumpe weist einen mit dem Flüssigkeitszellenauslass fluidverbundenen Flüssigkeitspumpbereich auf und ist zum Pumpen der Flüssigkeit aus dem Flüssigkeitspumpbereich bei Unterdruck im Innenraum der Flüssigkeitszelle ausgebildet. Ein Abstand zwischen dem Flüssigkeitszellenauslass der Flüssigkeitszelle und dem Flüssigkeitspumpbereich der Flüssigkeitspumpe ist so gewählt, dass die Flüssigkeit sich bei einem absoluten Druck von unter 600 mbar, beispielsweise unter 400 mbar, insbesondere von 100 mbar oder weniger, im Innenraum der Flüssigkeitszelle wenigstens bis in den Flüssigkeitspumpbereich der Flüssigkeitspumpe erstreckt, so dass diese die Flüssigkeit pumpen kann. Die Flüssigkeitszelle ist eine elektrochemische Zelle, die eine Arbeitselektrode und eine Gegenelektrode aufweist.

Unterdruck ist hier als absoluter Druck, der unterhalb des atmosphärischen Drucks liegt, zu verstehen, d.h., ein Unterdruck ist ein absoluter Druck kleiner als der atmosphärische Druck, z.B. kleiner als 1013,25 mbar bzw. 1 atm. Der Unterdruck im Innenraum der Flüssigkeitszelle kann beispielsweise ein absoluter Druck zwischen 0,1 mbar und bis zu unter 600 mbar sein. Bevorzugt kann der absolute Druck im Innenraum der Flüssigkeitszelle zwischen 0,1 mbar und 100 mbar betragen.

Der Innenraum der Flüssigkeitszelle kann mit einer Umgebung des Manipulatorkopfs fluidverbunden sein, d.h., Gase und Flüssigkeiten können zwischen dem Innenraum der Flüssigkeitszelle und der Umgebung des Manipulatorkopfs ausgetauscht werden. Die Flüssigkeitszelle kann hierfür beispielsweise eine Öffnung zur Umgebung des Manipulatorkopfs aufweisen. Dies ermöglicht es, wenn der Manipulatorkopf in dem Unterdruckgehäuse angeordnet ist, einen Druck im Innenraum der Flüssigkeitszelle über einen Betriebsdruck innerhalb des Unterdruckgehäuses einzustellen.

Der Manipulatorkopf kann beispielsweise in einem Unterdruckgehäuse eines Unterdrucksystems angeordnet sein, das nahe des Dampfdruckgleichgewichts der Flüssigkeit betrieben wird. Dadurch ist der Druck, der auf die Oberfläche der Flüssigkeit wirkt bzw. der Betriebsdruck, bei fester Temperatur vorgegeben. Bei solch einem niedrigen Betriebsdruck kann in aus dem Stand der Technik bekannten Unterdrucksystemen - je nach weiterer Parameter, wie z.B. Dichte der Flüssigkeit, Viskosität der Flüssigkeit, Innendurchmesser einer Flüssigkeitsleitung zwischen dem Flüssigkeitsleitungsauslass und dem Flüssigkeitspumpbereich bzw. Flüssigkeitsleitungsinnendurchmesser zum Abführen der Flüssigkeit, Material der Flüssigkeitsleitung, Länge der Flüssigkeitsleitung, etc. - die Flüssigkeit nicht allein aufgrund des Betriebsdrucks abfließen. Wenn man die Flüssigkeit austauschen möchte, müsste in aus dem Stand der Technik bekannten Unterdrucksystemen der Betriebsdruck erhöht werden, was zu einer Unterbrechung des Betriebs, beispielsweise einer Messung, führen würde.

Damit die Flüssigkeitspumpe die Flüssigkeit abpumpen kann, muss die Flüssigkeit sich in den Flüssigkeitspumpbereich der Flüssigkeitspumpe hinein erstrecken. Die Erfinder haben erkannt, dass der Betriebsdruck dies allein nicht sicherstellen kann, wenn der Abstand des Flüssigkeitszellenauslasses der Flüssigkeitszelle des aus dem Stand der Technik bekannten Unterdrucksystems, einen zu großen Abstand vom Flüssigkeitspumpbereich der Flüssigkeitspumpe hat. In diesem Fall kann der Druckverlust einer Leitung zwischen dem Flüssigkeitszellenauslass und dem Flüssigkeitspumpbereich der Flüssigkeitspumpe größer sein als der die Flüssigkeit in den Flüssigkeitspumpbereich drückende Druck.

Da der Manipulatorkopf sowohl die Flüssigkeitszelle als auch die Flüssigkeitspumpe aufweist, kann ein kompakter Aufbau erzielt werden, wodurch ein geringerer Abstand zwischen dem Flüssigkeitszellenauslass der Flüssigkeitszelle und dem Flüssigkeitspumpbereich der Flüssigkeitspumpe erreicht werden kann. Dies verringert die der Flüssigkeit entgegenwirkenden Kräfte, die die Flüssigkeit daran hindern sich bis in den Flüssigkeitspumpbereich der Flüssigkeitspumpe zu erstrecken. Insbesondere kann ein Druckverlust entlang einer Flüssigkeitsleitung zwischen dem Flüssigkeitszellenauslass der Flüssigkeitszelle und dem Flüssigkeitspumpbereich der Flüssigkeitspumpe verringert werden, wenn deren Abstand geringer und somit auch die Flüssigkeitsleitung zwischen dem Flüssigkeitszellenauslass und dem Flüssigkeitspumpbereich kürzer ist. Der Druckverlust wird insbesondere durch Reibungskräfte zwischen der Flüssigkeit und der Flüssigkeitsleitung bewirkt. Ein Druckverlust entlang der Flüssigkeitsleitung kann so weit verringert werden, dass ein Pumpen von Flüssigkeit durch die Flüssigkeitspumpe auch bei auf die Flüssigkeit wirkendem absoluten Druck von unter 600 mbar, beispielsweise von unter 400 mbar, wie z.B. von 100 mbar oder weniger, insbesondere zwischen 0,1 mbar und 100 mbar, z.B. zwischen 10 mbar und 100 mbar, möglich ist. Dadurch kann beim Betrieb des Manipulatorkopfs und insbesondere der Flüssigkeitszelle die Flüssigkeit bei einem absoluten Druck von unter 600 mbar, beispielsweise von 100 mbar oder weniger, gepumpt und somit ausgetauscht werden, ohne dass ein höherer Druck in der Umgebung des Manipulatorkopfs erzeugt werden muss, um ein Pumpen zu ermöglichen. Dies kann es auch ermöglichen die Flüssigkeitszelle zu entleeren. Da ein Brechen des Unterdrucks zum Austauschen der Flüssigkeit nicht erforderlich ist, kann ein Schmutzeintrag in die Umgebung des Manipulatorkopfs und insbesondere in die Flüssigkeitszelle verhindert oder zumindest verringert werden. Dies ermöglicht einen verbesserten Betrieb des Manipulatorkopfs. Beispielsweise, kann auch in einem Betrieb des Manipulatorkopfs und insbesondere der Flüssigkeitszelle im Dampfdruckgleichgewicht der Flüssigkeit die Flüssigkeit ohne Druckerhöhung gepumpt und beispielsweise ausgetauscht werden. Ferner ist eine Messung an einer Stelle bei unterschiedlichen Flüssigkeitsniveaus in der Flüssigkeitszelle möglich, da bei gewünschtem Betriebsdruck ein Hinzufügen oder Entfernen von Flüssigkeit aus der Flüssigkeitszelle möglich ist. So kann zum Beispiel, wenn der Manipulatorkopf in einem Unterdrucksystem mit einem Beleuchtungssystem und einem Detektorsystem zum Analysieren einer Probe verwendet wird, die Probe in einem unbenetzten, einem benetzten und einem Zustand mit unterschiedlich dickem Flüssigkeitsfilm auf der Oberfläche der Probe analysiert werden, ohne die zu messende Stelle auf der Probe ändern zu müssen.

Da der Abstand zwischen dem Flüssigkeitszellenauslass der Flüssigkeitszelle und dem Flüssigkeitspumpbereich der Flüssigkeitspumpe so gewählt ist, dass die Flüssigkeit sich bei Unterdruck von unter 600 mbar, insbesondere von 100 mbar oder weniger, im Innenraum der Flüssigkeitszelle wenigstens bis in den Flüssigkeitspumpbereich der Flüssigkeitspumpe erstreckt, kann die Flüssigkeit auch für verschiedene Flüssigkeiten und unterschiedliche Betriebsparameter der Flüssigkeitszelle gepumpt werden.

Ein Erstrecken in den Flüssigkeitspumpbereich der Flüssigkeitspumpe, so dass diese die Flüssigkeit pumpen kann, ist so zu verstehen, dass die Flüssigkeit sich so weit in die Flüssigkeitspumpe hinein erstreckt, dass Pumpenelemente wirken können, um die Flüssigkeit zu pumpen. Beispielsweise können Pumpenelemente Abdrückelemente, wie Roller oder Gleitschuhe einer Peristaltikpumpe sein. In diesem Fall muss sich die Flüssigkeit so weit in die Flüssigkeitspumpe erstrecken, dass durch ein Abdrücken einer Flüssigkeitsleitung der Flüssigkeitspumpe durch ein Abdrückelement und anschließendes Verfahren des Abdrückelements bei abgedrückter Flüssigkeitsleitung, Flüssigkeit gepumpt werden kann. In diesem Fall beginnt der Flüssigkeitspumpbereich hinter der Abdrückposition des Abdrückelements und die Flüssigkeit muss sich in der Flüssigkeitsleitung über die Abdrückposition des Abdrückelements erstrecken, damit die Flüssigkeitspumpe die Flüssigkeit pumpen kann.

Bei einem Unterdruck im Innenraum der Flüssigkeitszelle kann der auf die Flüssigkeit wirkende Druck grundsätzlich so gering sein, dass der Druckverlust entlang einer Flüssigkeitsleitung zwischen dem Flüssigkeitszellenauslass der Flüssigkeitszelle und dem Flüssigkeitspumpbereich der Flüssigkeitspumpe größer ist als der die Flüssigkeit in Richtung des Flüssigkeitspumpbereichs drückende Druck. In diesem Fall kann die Strecke vom Flüssigkeitszellenauslass zum Flüssigkeitspumpbereich nicht von der Flüssigkeit überwunden werden, so dass die Flüssigkeit nicht in den Flüssigkeitspumpbereich gelangt oder sich zumindest nicht so weit in die Flüssigkeitspumpe hinein erstreckt, dass diese die Flüssigkeit pumpen kann. In diesem Fall kann Flüssigkeit nicht aus der Flüssigkeitszelle abgepumpt werden, um diese zu entleeren. In anderen Worten kann in diesem Fall der Druck, der durch die Flüssigkeitssäule von wenigen cm erzeugt wird, also wenige mbar hydrostatischer Druck und gegebenenfalls ein dynamischer Druck durch Nachpumpen von Flüssigkeit in den Innenraum, geringer sein als der Druckverlust entlang der Flüssigkeitsleitung. Wenn die Flüssigkeitsleitung verkürzt wird, wird ab einer gewissen Länge der Druckverlust geringer als der auf die Flüssigkeit wirkende Druck, so dass sich die Flüssigkeit bis in den Flüssigkeitspumpbereich erstreckt und die Flüssigkeit gepumpt werden kann.

Der Druckverlust $\Delta p_{12}$ zwischen einer ersten Position der Flüssigkeitsleitung, zum Beispiel einem Flüssigkeitsleitungseingang und einer zweiten Position der Flüssigkeitsleitung, zum Beispiel der Abdrückposition des Abdrückelements, lässt sich beispielsweise basierend auf der Darcy-Weisbach-Gleichung bestimmen als $\Delta p_{12} = \frac{\rho \cdot u^2}{2} \left( \lambda \cdot \frac{l}{d} + \sum \zeta_i \right)$ mit $\rho$ der Dichte der Flüssigkeit, $u$ der Fließgeschwindigkeit der Flüssigkeit, $\lambda$ der Rohrreibungszahl, $l$ der Länge der Flüssigkeitsleitung zwischen der ersten Position und der zweiten Position und $d$ dem Flüssigkeitsleitungsinnendurchmesser, sowie optional einem Druckverlustbeiwert $\zeta_i$ für Formteile, wie zum Beispiel Bögen oder Reduzierungen. Sofern der Flüssigkeitsleitungsinnendurchmesser und dessen Material und die Fließgeschwindigkeit festgelegt sind, beispielsweise durch konstruktive Randbedingungen, kann über die Länge der Flüssigkeitsleitung der Druckverlust eingestellt werden. Ein Flüssigkeitsleitungsvolumen kann vorteilhafterweise minimiert werden, indem der Flüssigkeitsleitungsinnendurchmesser und die Länge der Flüssigkeitsleitung möglichst klein gewählt werden. Dies kann es beispielsweise ermöglichen ein Flüssigkeitstotvolumen zu verringern, so dass z.B. insbesondere bei einem Austausch der Flüssigkeit die Durchlaufzeit durch die Flüssigkeitsleitung verringert werden kann. Ferner kann die Menge an Flüssigkeit, die durch die Flüssigkeitsleitung fließt, verringert werden, so dass insbesondere für teure Flüssigkeiten Betriebskosten reduziert werden können.

Der Totaldruck $p_{tot}$ der in einer Flüssigkeitsleitung wirkt, lässt sich für stationäre Strömungen viskositätsfreier inkompressibler Fluide mit Hilfe der bernoullischen Druckgleichung: $p_{tot} = p_{dyn} + p_{stat}$ mit dem dynamischen Druck $p_{dyn} = \frac{\rho}{2} \cdot u^2$ und dem statischen Druck $p_{stat} = p + \rho \cdot g \cdot h$, der sich aus dem Betriebsdruck $p$ und dem hydrostatischen Druck der Fluidsäule $p_g = \rho \cdot g \cdot h$ zusammensetzt, bestimmen, wobei $g$ die Schwerebeschleunigung und $h$ die Höhe der Flüssigkeitssäule ist. Ferner können weitere Drücke, beispielsweise bei Kompressibilität der Flüssigkeit, Viskosität der Flüssigkeit und/oder Kapillarität der Flüssigkeitsleitung in der bernoullischen Druckgleichung berücksichtigt werden. Mit Hilfe der bernoullischen Druckgleichung und der Darcy-Weisbach-Gleichung kann dann eine maximale Länge der Flüssigkeitsleitung abgeschätzt werden, für die der Totaldruck größer als der Druckverlust ist und der Abstand zwischen dem Flüssigkeitszellenauslass und dem Flüssigkeitspumpbereich der Flüssigkeitspumpe kann entsprechend gewählt werden, so dass sich die Flüssigkeit in den Flüssigkeitspumpbereich der Flüssigkeitspumpe erstreckt und die Flüssigkeit gepumpt werden kann.

Der Fachmann kann den Abstand zwischen dem Flüssigkeitszellenauslass der Flüssigkeitszelle und dem Flüssigkeitspumpbereich der Flüssigkeitspumpe, für den sich die Flüssigkeit bei einem absoluten Druck von unter 600 mbar in den Flüssigkeitspumpbereich erstreckt zum Beispiel auch durch einfaches Experimentieren ermitteln. Hierfür kann beispielsweise für Flüssigkeitsleitungen mit identischem Flüssigkeitsleitungsinnendurchmesser und unterschiedlicher Länge probiert werden, für welche Flüssigkeitsleitungen die Flüssigkeit sich bis in den Flüssigkeitspumpbereich der Flüssigkeitspumpe erstreckt, so dass die Flüssigkeit gepumpt werden kann. Dies ermöglicht es Parameter des Unterdrucksystems in dem der Manipulatorkopf angeordnet ist, wie beispielsweise, eine Viskosität der Flüssigkeit, einen Flüssigkeitszellenauslassdurchmesser, einen Flüssigkeitsleitungsinnendurchmesser, einen Flüssigkeitspumpbereichsdurchmesser und weiterer Parameter zu berücksichtigen.

Der Abstand zwischen dem Flüssigkeitszellenauslass und dem Flüssigkeitspumpbereich kann ein vertikaler Abstand, ein horizontaler Abstand oder eine Kombination aus vertikalem und horizontalem Abstand sein. Durch das Vorsehen eines vertikalen Abstands zwischen dem Flüssigkeitszellenauslass und dem Flüssigkeitspumpbereich wirkt eine zusätzliche Gravitationskraft auf die Flüssigkeit, so dass ein zusätzlicher Druck erzeugt werden kann, um die Flüssigkeit in den Flüssigkeitspumpbereich zu drücken. Dies kann es beispielsweise auch ermöglichen Adhäsionskräften entgegenzuwirken. Anders formuliert, kann das Vorsehen eines vertikalen Abstands eine Gravitationskraft auf die Flüssigkeit erzeugen, so dass auch bei einem absoluten Druck von unter 600 mbar eine positive Kraft auf die Flüssigkeit wirkt, die die Flüssigkeit in den Flüssigkeitspumpbereich drückt, so dass Adhäsionskräfte der Flüssigkeitsleitung überwunden werden können.

Die Flüssigkeitsleitung kann von einem bei atmosphärischem Druck nicht kompressiblen Material gebildet sein. Das Material wird als nicht kompressibel angesehen, wenn sich ein Flüssigkeitsleitungsinnendurchmesser bei einem von außen auf die Flüssigkeitsleitung wirkenden atmosphärischen Druck um weniger als 5 % verkleinert, wenn innerhalb der Flüssigkeitsleitung ein Unterdruck, beispielsweise von unter 600 mbar, insbesondere von 100 mbar oder weniger, herrscht. Das Material der Flüssigkeitsleitung ist bevorzugt vakuumkompatibel, chemisch beständig und inert. Das Material kann beispielsweise Stahl oder Kunststoff, beispielsweise Polyetheretherketon (PEEK) oder Polytetrafluorethylen (PTFE) enthalten oder sein. Die Flüssigkeitsleitung kann zum Beispiel eine Stahlleitung sein, deren Innenwand mit einem Kunststoff, wie PEEK oder PTFE beschichtet ist. Alternativ kann die Flüssigkeitsleitung auch von einem elastischen Material gebildet sein, so dass die Flüssigkeitsleitung abgeklemmt werden kann. Die Flüssigkeitsleitung kann beispielsweise ein PEEK Schlauch sein.

Die Flüssigkeitsleitung kann derart ausgebildet sein, dass sie bei einem von außen auf die Flüssigkeitsleitung wirkenden atmosphärischen Druck nicht kollabiert oder sich der Flüssigkeitsleitungsinnendurchmesser um weniger als 5 % verkleinert, wenn innerhalb der Flüssigkeitsleitung ein absoluter Druck, beispielsweise von unter 600 mbar, insbesondere von 100 mbar oder weniger, herrscht. Hierfür können beispielsweise ein Flüssigkeitsleitungsinnendurchmesser, ein Flüssigkeitsleitungsaußendurchmesser, eine Flüssigkeitsleitungswandstärke und die Materialeigenschaften der Flüssigkeitsleitung entsprechend aufeinander abgestimmt sein.

Der Abstand zwischen dem Flüssigkeitszellenauslass und dem Flüssigkeitspumpbereich kann zum Beispiel zwischen 0,1 mm und 200 mm, beispielsweise zwischen 0,1 mm und 100 mm oder zwischen 1 mm und 40 mm betragen. Die Flüssigkeitsleitung kann entsprechend zum Beispiel eine Länge zwischen 0,1 mm und 200 mm, beispielsweise zwischen 0,1 mm und 100 mm oder 1 mm und 40 mm haben.

Die Flüssigkeitsleitung kann einen konstanten Flüssigkeitsleitungsinnendurchmesser beispielsweise zwischen 0,5 mm und 4 mm haben. Dies ermöglicht eine dünne Flüssigkeitsleitung vorzusehen, so dass ein kompakter Aufbau des Manipulatorkopfs möglich ist. Zudem kann ein verringertes Volumen für ein von der Flüssigkeitsleitung umschlossenes Lumen erreicht werden. Der Flüssigkeitsleitungsinnendurchmesser kann zum Beispiel zwischen 1 mm und 4 mm, beispielsweise 2 mm oder 2,8 mm, betragen. Ein größerer Flüssigkeitsleitungsinnendurchmesser führt auch zu einem größeren Flüssigkeitsleitungsaußendurchmesser, so dass ein kompakter Aufbau bei großem Flüssigkeitsleitungsinnendurchmesser nicht möglich ist. Ein kleinerer Flüssigkeitsleitungsinnendurchmesser kann Kapillareffekte erzeugen. Der Flüssigkeitsleitungsinnendurchmesser kann so gewählt sein, dass durch Kapillareffekte erzeugte Kräfte klein gegenüber anderen auf die Flüssigkeit wirkenden Kräften sind. Dies kann es ermöglichen die Adhäsionskräfte in der Flüssigkeitsleitung zu verringern.

Der Manipulatorkopf kann eine Anordnung von miteinander verbundener Flüssigkeitszelle und Flüssigkeitspumpe sein, die zusammen in einem Unterdruckgehäuse angeordnet, an einem Manipulator befestigt, oder in dem Unterdruckgehäuse angeordnet und an dem Manipulator befestigt sein können. Insbesondere kann der Manipulatorkopf ein Manipulatorkopf für einen Manipulator sein, d.h., der Manipulatorkopf kann geeignet sein mit einem Manipulator verbunden zu werden, insbesondere an einem Manipulator befestigt zu werden.

Der Manipulatorkopf kann ein Gehäuse aufweisen, in dem die Flüssigkeitszelle und die Flüssigkeitpumpe angeordnet sind. Alternativ können die Flüssigkeitszelle und die Flüssigkeitspumpe auch in separaten miteinander verbundenen Gehäusen angeordnet sein.

Der Manipulatorkopf kann eine Befestigungsvorrichtung aufweisen, die ausgebildet ist mit einem Manipulator befestigt zu werden. Die Befestigungsvorrichtung kann zum Beispiel einen Verschluss aufweisen. Die Befestigungsvorrichtung kann auch nur eine Oberfläche mit Befestigungsmitteln sein. Zum Beispiel kann die Befestigungsvorrichtung ein Boden des Manipulatorkopfs mit Gewindebohrungen sein, der auf eine Oberfläche des Manipulators abgestellt werden kann und in dessen Gewindebohrungen am Manipulator befestigbare Schrauben eingeführt werden können, um den Manipulatorkopf mit dem Manipulator zu verbinden.

Die Flüssigkeitspumpe kann auch unmittelbar an den Flüssigkeitszellenauslass anschließen, so dass der Abstand zwischen dem Flüssigkeitszellenauslass und dem Flüssigkeitspumpbereich eine sehr geringe Länge, beispielsweise von unter 1 mm, insbesondere von 0,5 mm oder weniger hat.

Die Flüssigkeitsleitung muss nicht am Flüssigkeitspumpbereich der Flüssigkeitspumpe enden. Die Flüssigkeitsleitung kann sich beispielsweise auch über den Flüssigkeitspumpbereich der Flüssigkeitspumpe hinaus erstrecken, insbesondere, wenn die Flüssigkeitspumpe eine Peristaltikpumpe ist, bei der die Flüssigkeitsleitung durch die Peristaltikpumpe hindurch verläuft.

Der Flüssigkeitszellenauslass und der Flüssigkeitspumpbereich können so zueinander angeordnet sein, dass die Flüssigkeit sich bei einem Unterdruck von unter 600 mbar, insbesondere von 100 mbar oder weniger, im Innenraum der Flüssigkeitszelle allein durch das Einwirken der Gravitationskraft, wenigstens bis in den Flüssigkeitspumpbereich erstreckt, so dass diese die Flüssigkeit pumpen kann.

Der Flüssigkeitszellenauslass kann in einem Bodenbereich der Flüssigkeitszelle, insbesondere an einem tiefsten Punkt des Innenraums der Flüssigkeitszelle, angeordnet sein. Der Flüssigkeitszellenauslass der Flüssigkeitszelle kann zum Flüssigkeitspumpbereich der Flüssigkeitspumpe mit einem vertikalen Abstand angeordnet sein, der so gewählt ist, dass die Flüssigkeit sich bei einem absoluten Druck von unter 600 mbar, beispielsweise von unter 400 mbar, insbesondere von 100 mbar oder weniger, im Innenraum der Flüssigkeitszelle wenigstens bis in den Flüssigkeitspumpbereich der Flüssigkeitspumpe erstreckt, so dass diese die Flüssigkeit pumpen kann.

Der Bodenbereich kann beispielsweise den Boden der Flüssigkeitszelle und/oder einen Teil der Wand der Flüssigkeitszelle, insbesondere einen Teil der Wand, der mit dem Boden in Kontakt ist, umfassen. Der Flüssigkeitszellenauslass kann an einem tiefsten Punkt des Innenraums der Flüssigkeitszelle angeordnet sein. Beispielsweise kann der Flüssigkeitszellenauslass in der Wand der Flüssigkeitszelle so angeordnet sein, dass ein tiefster Punkt des Flüssigkeitszellenauslasses einen tiefsten Punkt des Innenraums der Flüssigkeitszelle bildet.

Da der Flüssigkeitszellenauslass der Flüssigkeitszelle im Bodenbereich der Flüssigkeitszelle, insbesondere an einem tiefsten Punkt des Innenraums, angeordnet ist, kann die Flüssigkeit aus dem Innenraum in den Flüssigkeitszellenauslass fließen. Da der Flüssigkeitszellenauslass der Flüssigkeitszelle mit einem vertikalen Abstand zum Flüssigkeitspumpbereich der Flüssigkeitspumpe angeordnet ist, wirkt auf die Flüssigkeit zwischen dem Flüssigkeitszellenauslass der Flüssigkeitszelle und dem Flüssigkeitspumpbereich der Flüssigkeitspumpe eine Gravitationskraft. Die Gravitationskraft wirkt in entgegengesetzter Richtung zu Kräften, die ein Eindringen der Flüssigkeit bis in den Flüssigkeitspumpbereich der Flüssigkeitspumpe verhindern. Da der vertikale Abstand des Weiteren so gewählt ist, dass die Flüssigkeit sich bei einem absoluten Druck von unter 600 mbar, insbesondere von 100 mbar oder weniger, im Innenraum der Flüssigkeitszelle wenigstens bis in den Flüssigkeitspumpbereich der Flüssigkeitspumpe erstreckt, kann die Flüssigkeitspumpe die Flüssigkeit pumpen. In anderen Worten, der vertikale Abstand ist so gewählt, dass die Gravitationskraft stärker ist als alle ihr entgegenwirkenden Kräfte, die die Flüssigkeit daran hindern sich bis in den Flüssigkeitspumpbereich zu erstrecken.

Der vertikale Abstand kann zum Beispiel zwischen 1 mm und 200 mm, beispielsweise zwischen 1 mm und 40 mm, insbesondere zwischen 5 mm und 20 mm, beispielsweise 12 mm, betragen.

Ein Boden der Flüssigkeitszelle kann eine Neigung in Richtung des Flüssigkeitszellenauslasses aufweisen. Die Neigung kann so gewählt sein, dass die Flüssigkeit in Richtung des Flüssigkeitszellenauslasses fließt. Dies ermöglicht es ein Abfließen der Flüssigkeit in den Flüssigkeitszellenauslass zu verbessern, so dass ein Abfließen aus der Flüssigkeitszelle verbessert werden kann. Ein Neigungswinkel der Neigung kann beispielsweise zwischen 2° und 45° oder zwischen 2° und 20°, betragen. Der Flüssigkeitszellenauslass kann sich beispielsweise an einer Seite der Flüssigkeitszelle befinden oder in der Mitte der Flüssigkeitszelle.

Die Flüssigkeitspumpe kann eine Verdrängerpumpe, insbesondere eine Peristaltikpumpe, aufweisen. Dies ermöglicht einen einfachen Aufbau des Manipulatorkopfs.

Die Peristaltikpumpe kann ein Gehäuse aufweisen, das die Flüssigkeitsleitung umschließt. Die Flüssigkeitsleitung kann an einer Wand des Gehäuses angeordnet sein. Das Gehäuse kann einen Rotor und eine oder mehrere Abdrückelemente, wie zum Beispiel Rollen oder Gleitschuhe aufweisen. Der Rotor kann mit dieser oder mit diesen verbunden sein und diese antreiben. Die Rollen oder Gleitschuhe können derart angeordnet sein, dass sie während des Rotierens des Rotors einen jeweiligen Abschnitt der Flüssigkeitsleitung abdrücken bzw. abklemmen können, um so die Flüssigkeit zu pumpen. Die Rollen können beispielsweise schmiermittelfreie Hybridkugellager aufweisen. Wenn die Flüssigkeitspumpe in Form einer Peristaltikpumpe vorgesehen ist, ist die Flüssigkeitsleitung bevorzugt ein Schlauch, der von den Rollen oder Gleitschuhen der Peristaltikpumpe abgeklemmt werden kann. Das Vorsehen einer Flüssigkeitspumpe in Form einer Peristaltikpumpe ermöglicht einen einfachen und robusten Aufbau, bei dem die Flüssigkeit berührenden Teile, insbesondere eine Flüssigkeitsleitung in Form eines Schlauchs, einfach austauschbar sind.

Die Flüssigkeitspumpe kann auch z.B. eine Membranpumpe, eine Piezopumpe, eine Elektroosmosepumpe oder eine andere Art von Verdrängerpumpe sein oder aufweisen. Die Flüssigkeitspumpe kann auch eine Mikrofluidikpumpe sein oder aufweisen.

Die Flüssigkeitspumpe kann einen Einlassdruck von 0 mbar haben. Die Flüssigkeitspumpe kann aus einem oder mehreren temperaturbeständigen Materialien, beispielsweise temperaturbeständig bis über 150°C oder bis über 300°C gebildet sein, so dass die Flüssigkeitspumpe ausheizbar ist.

Die Flüssigkeitspumpe kann von ultrahochvakuum-kompatiblen (UHV-kompatiblen) Materialien gebildet sein. Die Materialien können einen sehr niedrigen Dampfdruck von beispielsweise weniger als $10^{-10}$ mbar bei 150°C bis zu einer Größenordnung von weniger als $10^{-8}$ mbar bei 130°C haben. Die Materialien können zum Beispiel Edelstahl, Aluminium oder PEEK sein oder enthalten.

Die Flüssigkeitszelle ist eine elektrochemische Zelle. Die elektrochemische Zelle weist eine Arbeitselektrode und eine Gegenelektrode auf. Dies ermöglicht es eine elektrochemische Zelle bei Unterdruck von 600 mbar oder weniger zu betreiben und mit einem geeigneten Analysesystem dessen Eigenschaften und Verhalten zu studieren. Die Arbeitselektrode kann beispielsweise als eine zu analysierende oder zu messende Probe dienen. Die Flüssigkeitszelle kann eine oder mehrere weitere Elektroden, beispielsweise eine Referenzelektrode, aufweisen.

Die Flüssigkeit kann beispielsweise einen flüssigen Elektrolyten, z.B. wasserbasierten Elektrolyten, enthalten oder ein flüssiger Elektrolyt, z.B. wasserbasierter Elektrolyt, sein. Alternativ, oder zusätzlich, kann die Flüssigkeit z.B. eine wasserbasierte Lösung, eine alkoholbasierte Flüssigkeit, beispielsweise einen Alkohol wie Glykol oder Ethanol, oder ein Öl, wie beispielsweise Motoröl, zum Beispiel 5W40, enthalten oder eine solche bzw. ein solcher sein.

Die Arbeitselektrode kann mit einer Neigung zu einer Flüssigkeitsoberfläche in der elektrochemischen Zelle angeordnet sein. Die Neigung kann beispielsweise zwischen 0,1° und 80°, insbesondere zwischen 15° und 45° betragen. Die Neigung kann so gewählt sein, dass ein erster Teil der Arbeitselektrode im Betrieb aus der Flüssigkeit herausragen, ein zweiter Teil der Arbeitselektrode von der Flüssigkeit benetzt sein und ein dritter Teil der Arbeitselektrode sich innerhalb der Flüssigkeit befinden kann. Die Arbeitselektrode kann mit einer festen Neigung relativ zu einer Gehäusewand der elektrochemischen Zelle angeordnet sein, so dass sich eine feste Neigung zu der Flüssigkeitsoberfläche einstellt, wenn die Flüssigkeitszelle mit der Flüssigkeit befüllt ist. Alternativ kann die Arbeitselektrode auf einer Neigungsvorrichtung angeordnet sein, die einen Neigungswinkel der Arbeitselektrode relativ zur Gehäusewand der elektrochemischen Zelle einstellen kann, so dass auch ein Neigungswinkel zur Flüssigkeitsoberfläche eingestellt werden kann. Alternativ, oder zusätzlich, kann die elektrochemische Zelle geneigt sein, so dass die Arbeitselektrode eine Neigung zur Flüssigkeitsoberfläche aufweist. Die elektrochemische Zelle kann beispielsweise mit Hilfe eines Manipulators geneigt werden.

Da die Arbeitselektrode mit einer Neigung zur Flüssigkeitsoberfläche in der elektrochemischen Zelle angeordnet werden kann, können verschiedene Messungen mit der Arbeitselektrode durchgeführt werden, nämlich an der Arbeitselektrode selbst, an der Arbeitselektrode, wenn diese von Flüssigkeit benetzt ist und an der Flüssigkeit selbst. Je nach Betrieb der elektrochemischen Zelle ist hierfür kein oder lediglich ein geringes Verfahren der Arbeitselektrode relativ zu einem Strahlungsspot oder des Strahlungsspots relativ zur Arbeitselektrode erforderlich.

Die Flüssigkeitszelle kann einen Deckel mit einer Öffnung aufweisen. Die Öffnung kann eine Größe haben, die sicherstellt, dass die Flüssigkeit in der Flüssigkeitszelle mit der Umgebung des Manipulatorkopfs fluidverbunden ist. Die Öffnung kann beispielsweise eine

Fläche zwischen 1 mm$^2$ und 10 cm$^2$ haben. Die Öffnung kann beispielsweise oval, kreisförmig oder rechteckig sein. Der Deckel ermöglicht es ein unbeabsichtigtes Austreten von Flüssigkeit aus der Flüssigkeitszelle in die Umgebung des Manipulatorkopfs zu verhindern oder zumindest zu reduzieren. Eine Innenseite des Deckels, die der Flüssigkeit gegenüberliegt kann beschichtet sein. Beispielsweise kann eine Beschichtung aus PTFE oder PEEK vorgesehen sein.

Eine Innenwand der Flüssigkeitszelle kann von einem Kunststoff, beispielsweise, PEEK gebildet sein. Die Innenwand der Flüssigkeitszelle kann auch mit PTFE beschichtet oder von PTFE gebildet sein.

Der Manipulatorkopf kann eine Temperierungsvorrichtung aufweisen. Die Temperierungsvorrichtung kann eine oder mehrere Heizungen und/oder Kühlungen enthalten. Die Temperierungsvorrichtung kann an oder in der Flüssigkeitsleitung, einer Flüssigkeitszuleitung, der Flüssigkeitszelle und/oder der Flüssigkeitspumpe angeordnet sein. Dies ermöglicht es die Flüssigkeit zu temperieren, d.h. zu erwärmen oder abzukühlen, um eine gewünschte Temperatur für die Flüssigkeit an einer bestimmten Position des Manipulatorkopfs einzustellen. Es können auch verschiedene Heizungen und Kühlungen an verschiedenen Positionen des Manipulatorkopfs vorgesehen sein. Dies kann es ermöglichen verschiedene Temperaturen für die Flüssigkeit an verschiedenen Positionen des Manipulatorkopfs einzustellen.

Der Manipulatorkopf kann eine Pufferzelle aufweisen. Die Pufferzelle kann zum Beispiel als Flüssigkeitsreservoir, insbesondere als Elektrolytreservoir dienen. Die Pufferzelle kann beispielsweise unter der Flüssigkeitszelle angeordnet sein. Die Pufferzelle kann dazu ausgebildet sein, Flüssigkeit, die aus der Flüssigkeitszelle austritt aufzufangen. Beispielsweise kann die Pufferzelle nach oben offen sein und eine größere Grundfläche als die Flüssigkeitszelle haben, um Flüssigkeit, die aus der Flüssigkeitszelle austritt, aufzufangen. Dies ermöglicht es unbeabsichtigt austretende Flüssigkeit aufzufangen.

Die Pufferzelle kann ausgebildet sein, als Dampfdruckpuffer zu dienen.

Die Temperierungsvorrichtung kann des Weiteren ausgebildet sein die Pufferzelle zu temperieren. Eine oder mehrere der Heizungen und/oder Kühlungen der Temperierungsvorrichtung können beispielsweise an oder in der Pufferzelle angeordnet sein. Dies ermöglicht es zum Beispiel die Pufferzelle aufzuheizen. Hierdurch kann beispielsweise ein Dampfdruckgleichgewicht zwischen einem Elektrolytvolumen in der elektrochemischen Zelle und einem Elektrolytvolumen in der Pufferzelle eingestellt werden, wenn die Flüssigkeit ein Elektrolyt ist. Dies kann es zum Beispiel ermöglichen ein Elektrolytniveau in der elektrochemischen Zelle konstant zu halten. Hierfür kann beispielsweise eine Temperatur der Pufferzelle langsam bzw. vorsichtig verändert werden, um das Dampfdruckgleichgewicht zwischen der elektrochemischen Zelle und der Pufferzelle auszugleichen, wenn diese in einem Unterdruckgehäuse bei Unterdruck betrieben werden.

Der Manipulatorkopf kann eines oder mehrere Flüssigkeitsreservoirs aufweisen oder mit diesen verbunden sein. Die Flüssigkeitsreservoirs können zum Beispiel in einem Hohlraum des Unterdruckgehäuses angeordnet sein. Dies ermöglicht es Flüssigkeit aus dem Flüssigkeitsreservoir in die Flüssigkeitszelle zu pumpen. Beispielsweise kann die Flüssigkeitspumpe oder eine andere Pumpe verwendet werden, um die Flüssigkeit vom Flüssigkeitsreservoir in die Flüssigkeitszelle zu pumpen. Die Flüssigkeitsreservoirs können als Dampfdruckpuffer dienen.

Der Manipulatorkopf kann eine Abstandsverstellvorrichtung aufweisen, die ausgebildet ist den Abstand zwischen der Flüssigkeitszelle und der Flüssigkeitspumpe einzustellen. Die Abstandsverstellvorrichtung kann eine Höhenverstelleinrichtung enthalten oder sein. Die Höheneinstellvorrichtung kann ausgebildet sein den vertikalen Abstand zwischen dem Boden der Flüssigkeitszelle und dem Flüssigkeitspumpbereich der Flüssigkeitspumpe einzustellen.

Alternativ kann der vertikale Abstand auch so gewählt sein, dass alle Flüssigkeiten, die im Betrieb des Manipulatorkopfs bei Unterdruck verwendet werden sollen sich wenigstens bis in den Flüssigkeitspumpbereich der Flüssigkeitspumpe erstrecken, so dass sie von dieser gepumpt werden können. Dies ermöglicht es sicherzustellen, dass die Flüssigkeit sich im Betrieb des Manipulatorkopfs bei einem absoluten Druck von unter 600 mbar, insbesondere von 100 mbar oder weniger, im Innenraum der Flüssigkeitszelle, in den Flüssigkeitspumpbereich der Flüssigkeitspumpe erstreckt. Daher kann der Abstand und insbesondere der vertikale Abstand an die weiteren Bedingungen bzw. Parameter des Betriebs, zum Beispiel die Viskosität der Flüssigkeit und den Flüssigkeitsleitungsinnendurchmesser, angepasst werden.

Gemäß einem weiteren Aspekt der Erfindung ist ein Manipulator vorgesehen. Der Manipulator hat einen Manipulatorinnenraum. Der Manipulator ist ausgebildet mit einem Unterdruckgehäuse hermetisch verbunden zu werden. Insbesondere kann ein von dem Unterdruckgehäuse umschlossener Hohlraum mit dem Manipulatorinnenraum hermetisch verbunden werden. Der Manipulator weist ferner einen verfahrbaren Schaft mit einem distalen Ende auf. Das distale Ende ist in einem mit dem Unterdruckgehäuse verbundenen Zustand des Manipulators in einem Hohlraum des Unterdruckgehäuses verfahrbar. Das distale Ende des verfahrbaren Schafts weist den Manipulatorkopf gemäß wenigstens einem der Ansprüche 1 bis 5 oder einer Ausführungsform des Manipulatorkopfs auf. In einem mit dem Unterdruckgehäuse verbundenen Zustand des Manipulators ist der Manipulatorkopf daher in dem Hohlraum des Unterdruckgehäuses angeordnet. Dies ermöglicht es den Manipulatorkopf in einem Unterdruckgehäuse zu verfahren, um die Flüssigkeitszelle beispielsweise in einer ersten Position zu präparieren und in einer zweiten Position zu analysieren bzw. eine Messung durchzuführen. Hierfür kann der verfahrbare Schaft den Manipulatorkopf von der ersten in die zweite Position verfahren, beispielsweise unter ein Analysesystem.

Wenigstens ein Teil des verfahrbaren Schafts kann im Manipulatorinnenraum angeordnet sein. Der Manipulator kann ein Gehäuse aufweisen, das den Manipulatorinnenraum umschließt. Das Gehäuse kann beispielsweise ein Hohlzylinder sein. Der Manipulatorinnenraum kann ein Lumen sein. Der verfahrbare Schaft kann wenigstens teilweise in dem Lumen angeordnet sein. Der verfahrbare Schaft kann ein proximales Ende aufweisen. Das proximale Ende des Schafts kann im mit dem Unterdruckgehäuse verbundenen Zustand des Manipulators außerhalb des Unterdruckgehäuses, beispielsweise im Lumen des Manipulators, angeordnet sein. Das proximale Ende des Schafts kann auch ein proximales Ende des Manipulators bilden und außerhalb des Lumens des Manipulators angeordnet sein. Das Gehäuse des Manipulators kann einen oder mehrere Zugänge in das Lumen aufweisen. Durch das Lumen und insbesondere in einem von dem verfahrbaren Schaft umschlossenen Schaftlumen, können Leitungen durch den Manipulator geführt sein. Die Leitungen können beispielsweise elektrische Leitungen und/oder Flüssigkeitsleitungen umfassen. Die Zugänge können beispielsweise am oder in der Nähe des proximalen Endes des Schafts vorgesehen sein.

Der Manipulator kann derart ausgebildet sein, dass das distale Ende des Schafts im Unterdruckgehäuse verfahren werden kann und/oder hinter ein Ventil im Manipulatorinnenraum zurückgefahren werden kann. Dies ermöglicht es eine am distalen Ende des Schafts angeordnete Flüssigkeitszelle mit einer Probe bei einem ersten Druck zu präparieren und bei einem zweiten Druck zu analysieren.

Der verfahrbare Schaft kann zusätzlich rotierbar sein. Dies kann es ermöglichen den Manipulatorkopf zu neigen.

Der Schaft kann beispielsweise einen Außendurchmesser zwischen 36 mm und 38 mm haben. Das Lumen, in dem der Schaft geführt ist, kann beispielsweise einen Lumeninnendurchmesser zwischen 38 mm und 40 mm haben.

Gemäß einem weiteren Aspekt der Erfindung ist ein Unterdrucksystem vorgesehen, das aufweist:

- ein Unterdruckgehäuse zum hermetischen Umschließen eines ersten Hohlraums bei einem Unterdruck und
- einen Manipulatorkopf gemäß wenigstens einem der Ansprüche 1 bis 5 oder einer Ausführungsform des Manipulatorkopfs.

Der Manipulatorkopf kann in dem ersten Hohlraum des Unterdruckgehäuses angeordnet sein. Das Unterdrucksystem kann ausgebildet sein in dem ersten Hohlraum einen absoluten Druck von unter 600 mbar, beispielsweise von unter 400 mbar, insbesondere von 100 mbar oder weniger zu erzeugen. Das Unterdrucksystem kann beispielsweise eine oder mehrere Pumpen aufweisen, um den Unterdruck im ersten Hohlraum zu erzeugen.

Gemäß einem weiteren Aspekt der Erfindung ist ein Unterdrucksystem vorgesehen, das aufweist:

- ein Unterdruckgehäuse zum hermetischen Umschließen eines ersten Hohlraums bei einem Unterdruck und
- einen Manipulator gemäß Anspruch 6 oder einer Ausführungsform des Manipulators.

Der Manipulator kann mit dem Unterdruckgehäuse hermetisch verbunden sein. Der Manipulatorkopf kann im ersten Hohlraum des Unterdruckgehäuses angeordnet sein. Das Unterdrucksystem kann ausgebildet sein in dem ersten Hohlraum einen absoluten Druck von unter 600 mbar, beispielsweise von unter 400 mbar, insbesondere von 100 mbar oder weniger zu erzeugen. Das Unterdrucksystem kann beispielsweise eine oder mehrere Pumpen aufweisen, um den Unterdruck im ersten Hohlraum zu erzeugen.

Das Unterdrucksystem gemäß Anspruch 7 oder 8 oder einer Ausführungsform des Unterdrucksystems kann ein Beleuchtungssystem und ein Detektorsystem aufweisen. Das Beleuchtungssystem kann dazu ausgebildet sein die Flüssigkeitszelle mit Teilchen oder einer Strahlung zu beleuchten. Das Detektorsystem kann dazu ausgebildet sein aus der Flüssigkeitszelle abgegebene Teilchen oder Strahlung zu empfangen.

Das Beleuchtungssystem kann eine Strahlungsquelle, beispielsweise eine Strahlungsquelle für elektromagnetische Strahlung, wie Röntgenstrahlung, Synchrotron-Strahlung, tiefe UV-Strahlung (engl. deep ultra-violet bzw. DUV) oder Licht aufweisen. Das Beleuchtungssystem kann zusätzlich einen Monochromator zum spektralen Isolieren einer bestimmten Wellenlänge aus einem von der Strahlungsquelle einfallenden Strahl aufweisen. Alternativ, oder zusätzlich kann das Beleuchtungssystem auch eine Teilchenquelle aufweisen. Dies ermöglicht es Teilchen oder eine Strahlung bereitzustellen, die zum Beleuchten der Flüssigkeitszelle verwendet werden können.

Das Beleuchtungssystem kann verfahrbar und/oder neigbar sein, so dass es an die Flüssigkeitszelle bzw. eine in der Flüssigkeitszelle befindliche Probe herangefahren werden kann, um die Flüssigkeitszelle bzw. die Probe mit den Teilchen oder der Strahlung zu beleuchten. Alternativ, oder zusätzlich, kann das Detektorsystem verfahrbar und/oder neigbar sein, so dass es an die Flüssigkeitszelle herangefahren werden kann, um aus der Flüssigkeitszelle abgegebene Teilchen oder Strahlung zu empfangen. Alternativ, oder zusätzlich, kann auch die Flüssigkeitszelle verfahrbar und/oder neigbar sein, beispielsweise mit Hilfe des Manipulators.

Der Manipulator kann es ermöglichen das Beleuchtungssystem, das Detektorsystem und die Flüssigkeitszelle so zueinander zu verfahren und zu neigen, dass eine Messung und/oder Analyse möglich ist. Zum Beispiel kann der Manipulator die Flüssigkeitszelle im ersten Hohlraum relativ zu dem Beleuchtungssystem und dem Detektorsystem verfahren und neigen.

Das Detektorsystem kann ausgebildet sein die aus der Flüssigkeitszelle abgegebenen Teilchen oder Strahlung zu analysieren. Das Detektorsystem kann beispielsweise ein Photoemissionsspektrometer sein. Das Detektorsystem kann eine Frontkappenelektrode, eine oder mehrere elektronische Linsen, einen oder mehrere Ablenker, einen Analysator und/oder einen Detektor aufweisen. Das Detektorsystem kann beispielsweise von der Frontkappenelektrode, den elektronischen Linsen, dem Analysator und dem Detektor gebildet sein. Das Detektorsystem kann einen oder mehrere miteinander verbundene Hohlräume aufweisen, die einen Innenraum des Detektorsystems bilden, durch den aus der Flüssigkeitszelle abgegebene Teilchen oder Strahlung von der Frontkappenelektrode zum Detektor geführt werden können bzw. kann. Zusätzlich kann das Detektorsystem auch einen oder mehrere Ablenker aufweisen, um die Teilchen oder Strahlung auf einen Eingang des Analysators auszurichten.

Die Frontkappenelektrode kann eine konische Form haben und eine Eingangsöffnung aufweisen, die einen konischen Verlauf hat, so dass sich in die Eingangsöffnung eintretende Gasmoleküle schnell hinter der Eingangsöffnung in dem Hohlraum, der von der Frontkappenelektrode umschlossen wird, verteilen können. Dies ermöglicht eine schnelle Druckreduktion. Hierdurch kann die freie Weglänge für Elektronen hinter der Eingangsöffnung erhöht werden.

In den mehreren miteinander verbundenen Hohlräumen können unterschiedliche Unterdrücke herrschen, die von der Eingangsöffnung in Richtung des Detektors weiter abnehmen können. Hierfür können verschiedene Druckreduktionsstufen vorgesehen sein und der Druck beispielsweise mit Hilfe von verschieden stark pumpenden Pumpen in den nacheinander angeordneten Hohlräumen verschieden stark reduziert werden. Dies kann es ermöglichen einen geringeren Druck im Detektorsystem aufrechtzuhalten, beispielsweise kann im Fall von einem absoluten Druck zwischen 0,1 mbar und 100 mbar, z.B. von 25 mbar, im ersten Hohlraum des Unterdruckgehäuses ein absoluter Druck im Bereich von $10^{-4}$ mbar bis $10^{-2}$ mbar, z.B. $10^{-3}$ mbar im von der Frontkappenelektrode umschlossenen Hohlraum, ein absoluter Druck von $10^{-6}$ mbar bis $10^{-4}$ mbar, z.B. $10^{-5}$ mbar in einem nachfolgenden Hohlraum und ein absoluter Druck im Bereich von $10^{-8}$ mbar bis $10^{-5}$ mbar, z.B. $10^{-6}$ mbar, im Hohlraum vor dem Detektor aufrechterhalten werden.

Der Analysator kann beispielsweise ein hemisphärischer Energieanalysator sein oder der Analysator kann einen solchen aufweisen. Der Detektor kann beispielsweise einen Elektronenvervielfacher, einen Phosphorschirm, eine Videokamera, einen CCD-Sensor (engl. charge-coupled device) und/oder einen CMOS-Sensor (engl. complementary metal-oxidesemiconductor) aufweisen. Der Detektor kann auch als ein DLD (engl. delay line detector) ausgeführt sein.

Die Eingangsöffnung der Frontkappenelektrode kann beispielsweise über der Flüssigkeitszelle, insbesondere der Öffnung im Deckel der Flüssigkeitszelle angeordnet werden. Die Frontkappenelektrode kann beispielsweise auch durch die Öffnung im Deckel der Flüssigkeitszelle in den Innenraum der Flüssigkeitszelle eingeführt sein. Dies kann es ermöglichen die Eingangsöffnung der Frontkappenelektrode unmittelbar über der als Probe dienenden Arbeitselektrode anzuordnen. Die Öffnung im Deckel der Flüssigkeitszelle kann derart ausgestaltet sein, dass sie es ermöglicht Teilchen oder Strahlung, beispielsweise Röntgenstrahlung, vom Beleuchtungssystem in die Flüssigkeitszelle einstrahlen zu lassen und Strahlung oder Teilchen, beispielsweise Elektronen, durch die Öffnung aus der Flüssigkeitszelle entweichen zu lassen. Der Deckel der Flüssigkeitszelle kann es ermöglichen Innenwände der Flüssigkeitszelle, insbesondere, wenn diese von PEEK gebildet oder mit PEEK beschichtet sind, zum Beispiel vor einer Aufladung während Photoemissionsexperimenten zu schützen.

In der Öffnung kann ein für Elektronen transparentes Fenster vorgesehen sein. Dieses kann beispielsweise von einer einlagigen Membran, zum Beispiel einlagigem Kohlenstoff, in anderen Worten Graphen, gebildet sein. Dies kann es ermöglichen einen gegenüber dem Druck im Innenraum der Flüssigkeitszelle anderen Druck in der Umgebung des Manipulatorkopfs im Unterdruckgehäuse einzustellen.

Das Unterdrucksystem kann einen zweiten im Betrieb von dem ersten Hohlraum hermetisch abgetrennten Hohlraum aufweisen. Der erste Hohlraum kann für eine Verwendung mit einem anderen Druckbereich als der zweite Hohlraum ausgebildet sein. Dies ermöglicht es beispielsweise im zweiten Hohlraum die Flüssigkeitszelle für eine Messung zu präparieren und im ersten Hohlraum eine Messung durchzuführen.

Die Flüssigkeit kann unerwünschte Gase enthalten, beispielsweise Sauerstoff ($O_2$), Kohlenstoffmonoxid (CO) oder Kohlenstoffdioxid ($CO_2$). Das Unterdrucksystem kann ausgebildet sein die Flüssigkeit zu entgasen, beispielsweise thermisch zu entgasen. Dies kann es ermöglichen ein unbeabsichtigtes Entgasen der Flüssigkeit in der Flüssigkeitszelle zu verhindern oder zumindest zu verringern. Das Unterdrucksystem kann beispielsweise ausgebildet sein eine Druckentgasung, eine Vakuumentgasung, eine Membranentgasung oder eine chemische Entgasung durchzuführen. Bevorzugt wird die Entgasung außerhalb des ersten Hohlraums durchgeführt. Dies ermöglicht es einen Schmutzeintrag in den ersten Hohlraum und insbesondere in die Flüssigkeitszelle zu verhindern oder zumindest zu verringern.

Das Unterdrucksystem kann ein oder mehrere Flüssigkeitsreservoirs zum Bereitstellen und/oder Auffangen der Flüssigkeit aufweisen. Die Flüssigkeitsreservoirs können im ersten Hohlraum angeordnet sein oder mit dem ersten Hohlraum fluidverbunden sein. Dies kann einen Flüssigkeitsaustausch ermöglichen, ohne, dass der Unterdruck gebrochen werden muss. Dies kann es ermöglichen einen Schmutzeintrag in den ersten Hohlraum und insbesondere in die Flüssigkeitszelle zu verhindern oder zumindest zu verringern.

Das Unterdrucksystem kann einen Potentiostaten aufweisen. Der Potentiostat kann mit einer oder mehrerer der Elektroden der elektrochemischen Zelle verbunden sein. Dies ermöglicht es das elektrische Potential innerhalb der elektrochemischen Zelle zu ändern.

Das Unterdrucksystem kann eine Unterdruckpumpe aufweisen oder mit einer Unterdruckpumpe verbunden sein, um einen Unterdruck in dem ersten Hohlraum zu erzeugen. Die Unterdruckpumpe kann ausgebildet sein, einen Unterdruck im ersten Hohlraum zu erzeugen. Die Unterdruckpumpe kann zum Beispiel ausgebildet sein einen absoluten Druck zwischen 0,1 mbar und 600 mbar, zwischen 0,1 mbar und 400 mbar, oder zwischen 1 mbar und 100 mbar, beispielsweise 20 mbar, zu erzeugen. Dies ermöglicht es im Unterdrucksystem verschiedene Drücke nahe dem Umgebungsdruck, insbesondere nahe dem atmosphärischen Druck, bevorzugt nahe dem Dampfdruck der verwendeten Flüssigkeit zu erzeugen. Die Unterdruckpumpe kann beispielsweise eine Membranpumpe sein.

Der erste Hohlraum kann mit einem Inertgas gefüllt sein. Beispielsweise können die verbleibenden Moleküle der Luft im ersten Hohlraum durch Inertgasmoleküle ersetzt werden. Das Inertgas kann beispielsweise ein Edelgas, z.B. Argon, oder eine Mischung von Edelgasen enthalten oder sein. Das Inertgas ermöglicht es chemische Reaktionen zwischen dem Inertgas und der Flüssigkeit zu verhindern.

Das Unterdruckgehäuse kann beispielsweise von Edelstahl gebildet sein. Das Unterdruckgehäuse kann ein oder mehrere Sperrventile aufweisen, um den ersten Hohlraum hermetisch von der Umgebung des Unterdruckgehäuses zu trennen.

Der erste Hohlraum kann beispielsweise ein Volumen zwischen 0,0001 $m^3$ und 1 $m^3$, wie zum Beispiel zwischen 0,001 $m^3$ und 0,1 $m^3$, insbesondere ein Volumen von 50 1, haben.

Das Unterdrucksystem kann eine Temperierungsvorrichtung aufweisen. Die Temperierungsvorrichtung kann eine oder mehrere Heizungen und/oder Kühlungen enthalten. Die Temperierungsvorrichtung kann an oder in der Flüssigkeitsleitung, dem verfahrbaren Schaft, einer Flüssigkeitszuleitung, der Pufferzelle, der Flüssigkeitszelle und/oder der Flüssigkeitspumpe angeordnet sein. Dies ermöglicht es die Flüssigkeit zu temperieren, d.h. zu erwärmen oder abzukühlen, um eine gewünschte Temperatur für die Flüssigkeit an einer bestimmten Position des Unterdrucksystems einzustellen. Es können auch verschiedene Heizungen und Kühlungen an verschiedenen Positionen des Unterdrucksystems vorgesehen sein. Dies kann es ermöglichen verschiedene Temperaturen für die Flüssigkeit an verschiedenen Positionen des Unterdrucksystems einzustellen.

Die Temperierungsvorrichtung kann eine Temperaturregelung aufweisen, die ausgebildet ist, ein Kochen der Flüssigkeit zu verhindern. Die Temperaturregelung kann mit einem oder mehreren Sensoren verbunden sein, um verschiedene Parameter, wie Druck und Temperatur der Flüssigkeit und Umgebung der Flüssigkeit zu erfassen. Dies kann es ermöglichen ein Kochen der Flüssigkeit zu verhindern, so dass ein Überspritzen der Flüssigkeit aus der Flüssigkeitszelle und somit eine Verschmutzung des Manipulatorkopfs und des ersten Hohlraums mit Flüssigkeit verhindert werden kann. Insbesondere kann die Temperaturregelung ermöglichen den Dampfdruck zu reduzieren und so ermöglichen die Flüssigkeitszelle bei einem geringeren Druck zu betreiben.

Gemäß einem weiteren Aspekt der Erfindung ist ein Verfahren zum Herstellen eines Manipulatorkopfs vorgesehen. Das Verfahren umfasst die Schritte:

- Bereitstellen einer Flüssigkeitszelle in Form einer elektrochemischen Zelle, die eine Arbeitselektrode und eine Gegenelektrode, einen Flüssigkeitszellenauslass und einen für Unterdruck ausgebildeten Innenraum aufweist, der ausgebildet ist eine Flüssigkeit aufzunehmen,
- Bereitstellen einer Flüssigkeitspumpe, die einen mit dem Flüssigkeitszellenauslass fluidverbundenen Flüssigkeitspumpbereich aufweist und die zum Pumpen der Flüssigkeit aus dem Flüssigkeitspumpbereich bei Unterdruck im Innenraum der Flüssigkeitszelle ausgebildet ist, und
- Wählen eines Abstands zwischen dem Flüssigkeitszellenauslass der Flüssigkeitszelle und dem Flüssigkeitspumpbereich der Flüssigkeitspumpe so, dass die Flüssigkeit sich bei einem absoluten Druck von unter 600 mbar, beispielsweise von unter 400 mbar, insbesondere von 100 mbar oder weniger, im Innenraum der Flüssigkeitszelle wenigstens bis in den Flüssigkeitspumpbereich der Flüssigkeitspumpe erstreckt, so dass diese die Flüssigkeit pumpen kann.

Der Innenraum der Flüssigkeitszelle kann so bereitgestellt werden, dass er mit einer Umgebung des Manipulatorkopfs fluidverbundenen ist, beispielsweise indem eine Öffnung in der Flüssigkeitszelle zur Umgebung des Manipulatorkopfs vorgesehen oder bereitgestellt wird.

Die Flüssigkeitszelle kann mit der Flüssigkeitspumpe hermetisch verbunden sein.

In einem weiteren Aspekt umfasst die Erfindung auch ein Verfahren zum Herstellen eines Unterdrucksystems. Das Verfahren zum Herstellen eines Unterdrucksystems enthält zusätzlich zu den Schritten zum Herstellen eines Manipulatorkopfs die Schritte:

- Bereitstellen eines Unterdruckgehäuses zum hermetischen Umschließen eines ersten Hohlraums bei einem Unterdruck und
- Bereitstellen des Manipulatorkopfs im ersten Hohlraum.

Das Verfahren zum Herstellen eines Unterdrucksystems kann auch einen Schritt des Bereitstellens eines Manipulators umfassen. Zusätzlich, oder alternativ, kann das Verfahrens zum Herstellen eines Unterdrucksystems auch die Schritte umfassen:

- Bereitstellen eines Beleuchtungssystems, das ausgebildet ist die Flüssigkeitszelle mit Teilchen oder einer Strahlung zu beleuchten, und
- Bereitstellen eines Detektorsystem, das ausgebildet ist aus der Flüssigkeitszelle abgegebene Teilchen oder Strahlung zu empfangen.

Gemäß einem weiteren Aspekt der Erfindung ist ein Verfahren zum Betreiben des Unterdrucksystems gemäß Anspruch 9 oder einer auf dem Unterdrucksystem des Anspruchs 9 basierenden Ausführungsform des Unterdrucksystems vorgesehen. Das Verfahren umfasst die Schritte:

- Erzeugen eines absoluten Drucks von unter 600 mbar, beispielsweise von unter 400 mbar, insbesondere von 100 mbar oder weniger im Innenraum der Flüssigkeitszelle,
- Bereitstellen der Flüssigkeit in der Flüssigkeitszelle,
- Pumpen der Flüssigkeit aus dem Flüssigkeitspumpbereich der Flüssigkeitspumpe mittels der Flüssigkeitspumpe, so dass die Flüssigkeit aus der Flüssigkeitszelle gepumpt wird,
- Anordnen der Flüssigkeitszelle, des Beleuchtungssystems und des Detektorsystems so zueinander, dass die Flüssigkeitszelle mit Teilchen oder Strahlung von dem Beleuchtungssystem beleuchtet werden kann und Strahlung oder Teilchen von dem Detektorsystem empfangen werden können,
- Beleuchten der Flüssigkeitszelle mit Teilchen oder einer Strahlung des Beleuchtungssystems und
- Detektieren von Strahlung oder Teilchen, die aus der Flüssigkeitszelle abgegeben wurden, in dem Detektorsystem.

Der Unterdruck im Innenraum kann beispielsweise dadurch erzeugt werden, dass Unterdruck im ersten Hohlraum erzeugt wird, wenn der Innenraum der Flüssigkeitszelle mit dem ersten Hohlraum fluidverbunden ist.

Das Bereitstellen der Flüssigkeit in der Flüssigkeitszelle und das Pumpen der Flüssigkeit aus dem Flüssigkeitspumpbereich der Flüssigkeitspumpe mittels der Flüssigkeitspumpe kann erfolgen, ohne, dass der Unterdruck aufgehoben werden muss. Dies ermöglicht es die Flüssigkeit während des Betriebs des Unterdrucksystems auszutauschen. Die Flüssigkeit kann bei einem Unterdruck, insbesondere bei einem absoluten Druck von unter 600 mbar ausgetauscht werden. Der Abstand zwischen dem Flüssigkeitszellenauslass und dem Flüssigkeitspumpbereich kann z.B. so gewählt sein, dass die Flüssigkeit sich bei einem absoluten Druck von unter 600 mbar im ersten Hohlraum wenigstens bis in den Flüssigkeitspumpbereich erstreckt, so dass die Flüssigkeitspumpe die Flüssigkeit pumpen kann.

Das Bereitstellen der Flüssigkeit in der Flüssigkeitszelle und das Pumpen der Flüssigkeit aus dem Flüssigkeitspumpbereich mittels der Flüssigkeitspumpe kann beispielsweise kontinuierlich durchgeführt werden. Dies ermöglicht ein kontinuierliches Austauschen der Flüssigkeit, beispielsweise von einem wasserbasierten Elektrolyten.

Das Verfahren zum Betreiben des Unterdrucksystems kann einen oder mehrerer der Schritte umfassen:

- Verfahren und/oder Neigen der Flüssigkeitszelle mittels des Manipulators, um die Flüssigkeitszelle, das Beleuchtungssystem und das Detektorsystem so zueinander anzuordnen, dass die Flüssigkeitszelle mit Teilchen oder Strahlung von dem Beleuchtungssystem beleuchtet werden kann und Strahlung oder Teilchen von dem Detektorsystem empfangen werden können,
- Bereitstellen der Flüssigkeit in der Flüssigkeitszelle während des Pumpens der Flüssigkeit aus dem Flüssigkeitspumpbereich der Flüssigkeitspumpe,
- Bereitstellen der Flüssigkeit in der Flüssigkeitszelle und Pumpen der Flüssigkeit aus dem Flüssigkeitspumpbereich der Flüssigkeitspumpe so, dass ein bestimmtes Flüssigkeitsniveau innerhalb des Innenraums der Flüssigkeitszelle konstant gehalten wird,
- Bereitstellen der Flüssigkeit in der Flüssigkeitszelle und Pumpen der Flüssigkeit aus dem Flüssigkeitspumpbereich der Flüssigkeitspumpe so, dass das Flüssigkeitsniveau innerhalb des Innenraums der Flüssigkeitszelle geändert wird,
- Neigen der Arbeitselektrode der elektrochemischen Zelle so, dass ein erster Teil der Arbeitselektrode im Betrieb aus der Flüssigkeit herausragen, ein zweiter Teil der Arbeitselektrode von der Flüssigkeit benetzt sein und ein dritter Teil der Arbeitselektrode sich innerhalb der Flüssigkeit befinden kann,
- Bereitstellen der Flüssigkeit in der elektrochemischen Zelle und Pumpen der Flüssigkeit aus dem Flüssigkeitspumpbereich der Flüssigkeitspumpe so, dass ein erster Teil der Arbeitselektrode im Betrieb aus der Flüssigkeit herausragt, ein zweiter Teil der Arbeitselektrode von der Flüssigkeit benetzt ist und ein dritter Teil der Arbeitselektrode sich innerhalb der Flüssigkeit befindet,
- Beleuchten der Arbeitselektrode der elektrochemischen Zelle mit Teilchen oder einer Strahlung von dem Beleuchtungssystem, so dass nacheinander der erste Teil der Arbeitselektrode, der im Betrieb aus der Flüssigkeit herausragt, der zweite Teil der Arbeitselektrode, der von der Flüssigkeit benetzt ist und der dritte Teil der Arbeitselektrode, der sich innerhalb der Flüssigkeit befindet, beleuchtet werden.

Das Bereitstellen der Flüssigkeit kann so erfolgen, dass ein Überkochen der Flüssigkeit vermieden wird, beispielsweise, indem mit einer begrenzten Pumpgeschwindigkeit gepumpt wird und/oder mit einem vorbestimmten maximalen Druck gepumpt wird.

Das Verfahren zum Betreiben des Unterdrucksystems kann auch die Schritte umfassen:

- Bereitstellen der Flüssigkeit in der Flüssigkeitszelle und Pumpen der Flüssigkeit aus dem Flüssigkeitspumpbereich der Flüssigkeitspumpe so, dass sich das Flüssigkeitsniveau innerhalb der Flüssigkeitszelle kontinuierlich ändert und
- Beleuchten der Arbeitselektrode der elektrochemischen Zelle mit Teilchen oder einer Strahlung von dem Beleuchtungssystem an einer bestimmten Stelle der Arbeitselektrode während sich das Flüssigkeitsniveau innerhalb der Flüssigkeitszelle kontinuierlich ändert.

Die kontinuierliche Änderung kann eine Periodizität aufweisen, beispielsweise kann das Flüssigkeitsniveau bis zu einem maximalen Flüssigkeitsniveau steigen, danach bis zu einem maximalen Flüssigkeitsniveau sinken und dann wieder bis zu dem maximalen Flüssigkeitsniveau steigen.

Gemäß einem weiteren Aspekt der Erfindung ist eine Verwendung des Unterdrucksystems gemäß Anspruch 9 oder einer auf dem Unterdrucksystem des Anspruchs 9 basierenden Ausführungsform des Unterdrucksystems vorgesehen für:

- eine Oberflächenanalyse,
- eine Messung einer Oberflächenreaktion,
- eine Messung von Flüssigkeit-Feststoff-Reaktionen,
- eine Messung von Flüssigkeit-Gas-Reaktionen,
- eine Messung von Flüssigkeiten,
- eine Messung von dünnen Schichten,
- eine Detektion von Fremdsubstanzen in Flüssigkeiten,
- eine Photoemissionmessung,
- eine Photoelektronenspektroskopiemessung nahe am atmosphärischen Druck,
- eine Röntgenphotoelektronenspektroskopiemessung nahe am atmosphärischen Druck,
- eine elektrochemische Messung,
- eine Batterieanalyse,
- eine Oxidationsmessung,
- eine Elektrolytmessung,
- eine Elektrodenmessung,
- eine Probenmessung durch eine Flüssigkeit hindurch,
- eine Qualitätskontrolle,
- eine Korrosionsmessung,
- eine Katalysatormessung,
- eine druckabhängige Messung,
- eine Messung einer biologischen Probe,
- eine Potentiometrie-Messung,
- eine Messung einer supersaturierten Flüssigkeit.

Ferner ist gemäß einem weiteren Aspekt der Erfindung eine Verwendung des Verfahrens gemäß Anspruch 11 oder 12 oder irgendeiner Ausführungsform des Verfahrens zum Betreiben des Unterdrucksystems gemäß Anspruch 9 oder einer auf dem Unterdrucksystem des Anspruchs 9 basierenden Ausführungsform des Unterdrucksystems vorgesehen für:

- eine Oberflächenanalyse,
- eine Messung einer Oberflächenreaktion,
- eine Messung von Flüssigkeit-Feststoff-Reaktionen,
- eine Messung von Flüssigkeit-Gas-Reaktionen,
- eine Messung von Flüssigkeiten,
- eine Messung von dünnen Schichten,
- eine Detektion von Fremdsubstanzen in Flüssigkeiten,
- eine Photoemissionmessung,
- eine Photoelektronenspektroskopiemessung nahe am atmosphärischen Druck,
- eine Röntgenphotoelektronenspektroskopiemessung nahe am atmosphärischen Druck,
- eine elektrochemische Messung,
- eine Batterieanalyse,
- eine Oxidationsmessung,
- eine Elektrolytmessung,
- eine Elektrodenmessung,
- eine Probenmessung durch eine Flüssigkeit hindurch,
- eine Qualitätskontrolle,
- eine Korrosionsmessung,
- eine Katalysatormessung,
- eine druckabhängige Messung,
- eine Messung einer biologischen Probe,
- eine Potentiometrie-Messung,
- eine Messung einer supersaturierten Flüssigkeit.

Gemäß einem weiteren Aspekt der Erfindung ist ein Computerprogrammprodukt zum Betreiben des Unterdrucksystems gemäß Anspruch 9 oder einer auf dem Unterdrucksystem des Anspruchs 9 basierenden Ausführungsform des Unterdrucksystems vorgesehen. Das Computerprogrammprodukt enthält Computerprogrammcodemittel, die einen Prozessor veranlassen das Verfahren gemäß Anspruch 11 oder 12 oder irgendeiner Ausführungsform des Verfahrens auszuführen, wenn das Computerprogrammprodukt auf dem Prozessor ausgeführt wird.

Gemäß einem weiteren Aspekt ist ein computerlesbares Medium vorgesehen, das das Computerprogrammprodukt gespeichert hat.

Der Manipulatorkopf gemäß Anspruch 1, der Manipulator gemäß Anspruch 6, das Unterdrucksystem gemäß Anspruch 7, das Unterdrucksystem gemäß Anspruch 8, das Verfahren gemäß Anspruch 10, das Verfahren gemäß Anspruch 12, die Verwendung gemäß Anspruch 13 und die Verwendung gemäß Anspruch 14 können ähnliche und/oder identische bevorzugte Ausführungsformen haben, wie sie insbesondere in den abhängigen Ansprüchen definiert sind.

Des Weiteren kann eine bevorzugte Ausführung der Erfindung auch jedwede Kombination der Merkmale der abhängigen Ansprüche oder der vorgenannten Ausführungsformen in Verbindung mit dem entsprechenden unabhängigen Anspruch sein.

Diese und weitere Aspekte der Erfindung werden im Folgenden mit Bezug zu in den Figuren dargestellten Ausführungsbeispielen näher erläutert.

KURZE BESCHREIBUNG DER FIGUREN

In den folgenden Figuren zeigt:

FIG 1 schematisch und exemplarisch ein erstes Ausführungsbeispiel des Unterdrucksystems in Form eines Photoelektronenspektroskopiesystems mit einem an einem Manipulator befestigten Manipulatorkopf gemäß eines ersten Ausführungsbeispiels mit einer elektrochemischen Zelle;
FIG 2 schematisch und exemplarisch einen Manipulatorkopf gemäß eines zweiten Ausführungsbeispiels;
FIG 3 schematisch und exemplarisch ein zweites Ausführungsbeispiel des Unterdrucksystems in Form eines Photoelektronenspektroskopiesystems mit einem in einem Unterdruckgehäuse befestigten Manipulatorkopf gemäß eines dritten Ausführungsbeispiels;
FIG 4 schematisch und exemplarisch einen Manipulatorkopf gemäß eines vierten Ausführungsbeispiels;
FIG 5 ein exemplarisches Flussdiagramm eines Ausführungsbeispiels des Verfahrens zum Betreiben des Unterdrucksystems;
FIG 6 ein exemplarisches Flussdiagramm eines Ausführungsbeispiels eines Verfahrens zum Herstellen des Manipulatorkopfs.

BESCHREIBUNG DER AUSFÜHRUNGSBEISPIELE

Der im Folgenden anhand von verschiedenen Ausführungsbeispielen beschriebene Manipulatorkopf und die Ausführungsbeispiele eines Unterdrucksystems mit dem Manipulatorkopf, sowie das Verfahren zum Betreiben des Unterdrucksystems ermöglichen es, dass Flüssigkeiten selbst bei absolutem Betriebsdruck von unter 600 mbar, beispielsweise von unter 400 mbar, insbesondere von 100 mbar oder weniger, bevorzugt im Bereich zwischen 0,1 mbar und 100 mbar, z.B. zwischen 10 mbar und 100 mbar, abgepumpt werden können. Somit kann eine Flüssigkeitszelle bei Bedarf ohne Erhöhen des Betriebsdruck entleert werden und die Flüssigkeit in der Flüssigkeitszelle ausgetauscht werden. Ferner kann ein Flüssigkeitsniveau ohne Änderung des Betriebsdrucks in der Flüssigkeitszelle geändert werden. Dies ermöglicht es, dass Messungen an einer Stelle einer Festkörperprobe mit unterschiedlichen Benetzungsgraden einer Flüssigkeit durchgeführt werden können. Des Weiteren kann, beispielsweise, kontinuierlich die Flüssigkeit ausgetauscht werden, ohne das Flüssigkeitsniveau zu ändern. Damit kann beispielsweise die Flüssigkeit außerhalb der Flüssigkeitszelle verändert, die veränderte Flüssigkeit in die Flüssigkeitszelle eingeführt und die Änderung an der Flüssigkeit gemessen werden. Ferner ist es möglich längere Messungen durchzuführen, falls sich eine Flüssigkeit während der Messung verbraucht, da die Flüssigkeit während der Messung ohne Änderung der Messbedingungen nachgefüllt werden kann.

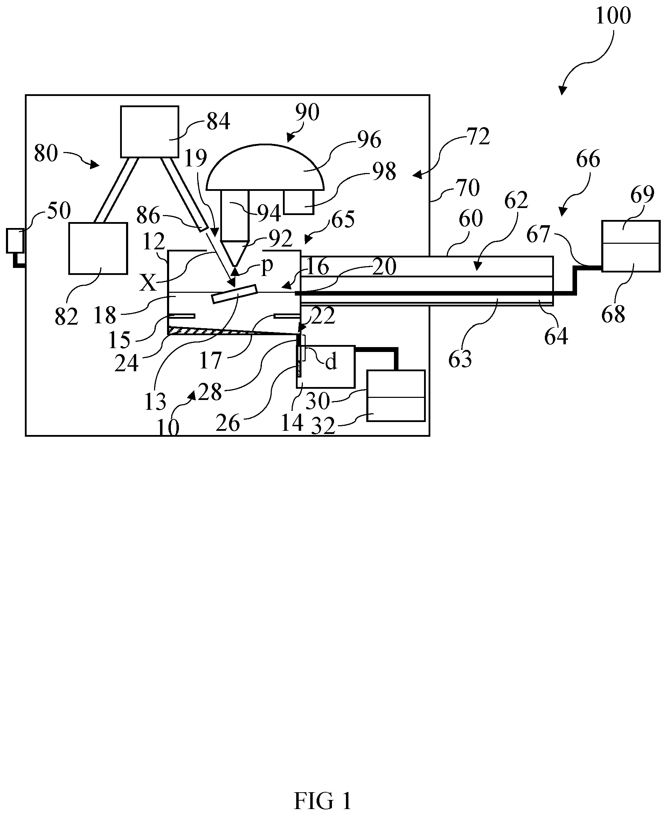

FIG 1 zeigt schematisch und exemplarisch ein erstes Ausführungsbeispiel eines Unterdrucksystems in Form eines Photoelektronenspektroskopie (PES)-Systems 100. Das PES-System 100 kann beispielsweise dafür verwendet werden Messungen an einer Probe, z.B. einer Arbeitselektrode, und einer Flüssigkeit in Form eines wasserbasierten Elektrolyten bei einem Druck nahe dem Umgebungsdruck, insbesondere bei einem absoluten Druck zwischen 0,1 mbar und 100 mbar, durchzuführen. Hierbei wird eine Strahlung auf die Probe und die Flüssigkeit eingestrahlt und Photoelektronen, die durch die Strahlung erzeugt werden, werden detektiert.

Das PES-System 100 enthält einen Manipulatorkopf 10, eine Vakuumpumpe 50, einen Manipulator 60, ein Unterdruckgehäuse 70 in Form einer Vakuumkammer, ein Beleuchtungssystem 80 in Form einer monochromatisierten Aluminium (Al)-Röntgenstrahlungsquelle und ein Detektorsystem 90. Anstatt einer Aluminium Röntgenstrahlungsquelle kann auch eine andere Röntgenstrahlungsquelle, beispielsweise eine Silber (Ag) oder Chrom (Cr) Röntgenstrahlungsquelle oder eine Röntgenstrahlungsquelle, die mehrere Wellenlängen bereitstellt, verwendet werden.

Der Manipulatorkopf 10 ist zur Verwendung in dem Unterdruckgehäuse 70 bei Unterdruck, zum Beispiel im Bereich zwischen 0,1 mbar und 600 mbar ausgebildet. Hierfür werden speziell für solche Drücke geeignete Materialien verwendet, um den Manipulatorkopf herzustellen.

Der Manipulatorkopf 10 enthält in diesem Ausführungsbeispiel eine Flüssigkeitszelle 12 in Form einer elektrochemischen Zelle und eine Flüssigkeitspumpe 14 in Form einer Peristaltikpumpe (Details nicht gezeigt). Alternativ kann auch eine andere Art von Flüssigkeitspumpe verwendet werden, insbesondere eine andere Art von Verdrängerpumpe. Es können auch mehrere Flüssigkeitspumpen vorgesehen sein.

Die Flüssigkeitszelle 12 hat einen für Unterdruck ausgebildeten Innenraum 16, der ausgebildet ist eine Flüssigkeit 18 in Form des wasserbasierten Elektrolyten aufzunehmen. Der Innenraum 16 ist über eine Öffnung 19 mit der Umgebung des Manipulatorkopfs 10 fluidverbunden. Die Flüssigkeitszelle 12 hat in diesem Ausführungsbeispiel drei Elektroden 13, 15 und 17, nämlich eine Arbeitselektrode 13, eine Gegenelektrode 15 und eine Referenzelektrode 17. In anderen Ausführungsbeispielen kann auch eine andere Anzahl an Elektroden vorgesehen sein, beispielsweise 2 oder 4. Die Flüssigkeit 18 kann über einen Flüssigkeitszelleneinlass 20 in die Flüssigkeitszelle 12 eingeführt und über einen Flüssigkeitszellenauslass 22 wieder aus der Flüssigkeitszelle 12 abgeführt werden. Der Flüssigkeitszellenauslass 22 ist in diesem Ausführungsbeispiel an einem tiefsten Punkt des Innenraums 16 der Flüssigkeitszelle 12, nämlich einem tiefsten Punkt eines Bodens 24 der Flüssigkeitszelle 12, angeordnet. In anderen Ausführungsbeispielen kann der Flüssigkeitszellenauslass auch beispielsweise in einem anderen Bodenbereich der Flüssigkeitszelle, z.B. auch an einer Wand der Flüssigkeitszelle mit Bodenkontakt angeordnet sein. Der Boden 24 der Flüssigkeitszelle 12 hat des Weiteren in diesem Ausführungsbeispiel eine Neigung in Richtung des Flüssigkeitszellenauslasses 16 mit einem Neigungswinkel von 10°. In anderen Ausführungsbeispielen kann der Boden auch ohne Neigung oder mit einer anderen Neigung ausgeführt sein, beispielsweise einer Neigung in Richtung des Flüssigkeitszellenauslasses mit einem Neigungswinkel zwischen 2° und 20°, so dass die Flüssigkeit in Richtung des Flüssigkeitszellenauslasses fließt und dadurch besser aus der Flüssigkeitszelle hinaus fließt.

Die Flüssigkeitspumpe 14 hat einen Flüssigkeitspumpbereich 26, der mit dem Flüssigkeitszellenauslass 22 fluidverbunden ist. Hierfür ist der Flüssigkeitszellenauslass 22 über eine Flüssigkeitsleitung 28 in Form eines Schlauchs aus PEEK mit dem Flüssigkeitspumpbereich 26 verbunden. Die Flüssigkeitspumpe 14 ist zum Pumpen der Flüssigkeit 18 aus dem Flüssigkeitspumpbereich 26 bei Unterdruck im Innenraum 16 der Flüssigkeitszelle 12 ausgebildet. In diesem Ausführungsbeispiel erstreckt sich die Flüssigkeitsleitung 28 durch die Flüssigkeitspumpe 14 hindurch bis in ein Flüssigkeitsreservoir 30, in der abgepumpte Flüssigkeit 32 gelagert werden kann. Die Flüssigkeitsleitung 28 ist für eine bessere Übersicht nur teilweise innerhalb der Flüssigkeitspumpe 14 dargestellt. Die Flüssigkeitspumpe 14 hat Roller (nicht gezeigt), die die Flüssigkeitsleitung 28 innerhalb der Flüssigkeitspumpe 14 abdrücken können, so dass durch ein Verfahren der Roller abschnittsweise die Flüssigkeit 18 durch die Flüssigkeitsleitung 28 gepumpt werden kann. Die Roller können erst ab einer Abdrückposition die Flüssigkeitsleitung abdrücken, die in diesem Fall den Beginn des Flüssigkeitspumpbereichs 26 markiert.

Ein Abstand d zwischen dem Flüssigkeitszellenauslass 22 der Flüssigkeitszelle 12 und dem Flüssigkeitspumpbereich 26 der Flüssigkeitspumpe 14 ist so gewählt, dass die Flüssigkeit 18 sich bei einem absoluten Druck im Bereich zwischen 0,1 mbar und 100 mbar, im Innenraum 16 der Flüssigkeitszelle 12 wenigstens bis in den Flüssigkeitspumpbereich 26 erstreckt, so dass die Flüssigkeitspumpe 14 die Flüssigkeit 18 pumpen kann. Anders ausgedrückt, ist das Ziel den Abstand zwischen dem Flüssigkeitszellenauslass der Flüssigkeitszelle und dem Flüssigkeitspumpbereich der Flüssigkeitspumpe so kurz zu machen, dass der Druckverlust kleiner ist als die zwischen dem Flüssigkeitszellenauslass und dem Flüssigkeitspumpbereich bestehende Druckdifferenz. In diesem Ausführungsbeispiel ist der Abstand d ein vertikaler Abstand. In anderen Ausführungsbeispielen kann sich der Abstand auch aus einem vertikalen Abstand und einem horizontalen Abstand zusammensetzen. In anderen Ausführungsbeispielen kann der Abstand zwischen dem Flüssigkeitszellenauslass und dem Flüssigkeitspumpbereich auch so gewählt sein, dass die Flüssigkeit sich bei einem absoluten Druck im Bereich von unter 600 mbar, beispielsweise von unter 400 mbar, insbesondere von 100 mbar oder weniger, wenigstens bis in den Flüssigkeitspumpbereich erstreckt, so dass die Flüssigkeitspumpe die Flüssigkeit pumpen kann.

In diesem Ausführungsbeispiel haben der Flüssigkeitsauslass 22 und die Flüssigkeitsleitung 28 einen konstanten Innendurchmesser, der jeweils 2,8 mm beträgt. In anderen Ausführungsbeispielen können die Innendurchmesser auch unterschiedlich groß sein und beispielsweise zwischen 1 mm und 4 mm, beispielsweise 2 mm, betragen. Der Innendurchmesser der Flüssigkeitsleitung kann in weiteren Ausführungsbeispielen auf eine Anwendung, insbesondere eine Viskosität der Flüssigkeit angepasst sein.

Der Abstand d zwischen dem Flüssigkeitszellenauslasses 22 und dem Flüssigkeitspumpbereich 26 beträgt in diesem Ausführungsbeispiel 12 mm. In diesem Fall beträgt eine Länge eines Flüssigkeitsleitungsabschnitts zwischen dem Flüssigkeitszellenauslass 22 und dem Flüssigkeitspumpbereich 26 auch 12 mm. In anderen Ausführungsbeispielen kann der Abstand auch zum Beispiel zwischen 1 mm und 200 mm betragen.

Die Vakuumpumpe 50 kann Gas aus dem Unterdruckgehäuse 70 abpumpen, so dass in einem ersten Hohlraum 72 des Unterdruckgehäuses 70 ein Unterdruck erzeugt werden kann. Der Unterdruck ist in diesem Fall ein absoluter Druck zwischen 0,1 mbar und 100 mbar, beispielsweise 0,5 mbar, 1 mbar, oder 2 mbar. In anderen Ausführungsbeispielen kann der Unterdruck beispielsweise ein absoluter Druck unter 600 mbar, unter 400 mbar, oder 100 mbar oder weniger sein.

Der Manipulator 60 hat einen Manipulatorinnenraum 62 und einen verfahrbaren Schaft 64. Der Schaft 64 ist zudem auch rotierbar. Der Manipulator 60 ist mit dem Unterdruckgehäuse 70 hermetisch verbunden. Der verfahrbare Schaft 64 hat ein distales Ende 65 und ein proximales Ende 66. Das distale Ende 65 ist im ersten Hohlraum 72 des Unterdruckgehäuses 70 angeordnet und das proximale Ende 66 befindet sich außerhalb des Unterdruckgehäuses 70. Durch ein durch den verfahrbaren Schaft 64 verlaufendes Lumen 63 verläuft eine Flüssigkeitszuleitung 67 von einem Flüssigkeitsreservoir 69. In dem Flüssigkeitsreservoir 69 ist eine Zuleitungsflüssigkeit 68 gelagert, die in die Flüssigkeitszelle 12 eingeführten werden kann. Hierfür ist die Flüssigkeitszuleitung 67 über den Flüssigkeitszelleneinlass 20 mit der Flüssigkeitszelle 12 verbunden. Der Manipulatorkopf 10 ist an dem distalen Ende 65 des verfahrbaren Schafts 64 des Manipulators 60 befestigt. Im mit dem Unterdruckgehäuse 70 verbundenen Zustand des Manipulators 60 ist der verfahrbare Schaft 64 im ersten Hohlraum 72 des Unterdruckgehäuses 70 verfahrbar und neigbar, so dass der Manipulatorkopf 10 in dem ersten Hohlraum 72 des Unterdruckgehäuses 70 angeordnet ist.

Das Beleuchtungssystem 80 enthält eine Röntgenstrahlungsquelle 82. In der Röntgenstrahlungsquelle 82 beschleunigt eine Elektronenkanone Elektronen auf eine Al-Anode (nicht gezeigt). Durch die auf die Al-Anode einschlagenden Elektronen wird Röntgenstrahlung erzeugt, die mit Hilfe des Monochromators 84 monochromatisiert wird. Die monochromatisierte Röntgenstrahlung X tritt aus einem Monochromatorausgang 86 aus und strahlt auf die Arbeitselektrode 13 ein, um Photoelektronen p anzuregen. In anderen Ausführungsbeispielen kann das Beleuchtungssystem auch eine andere Strahlung oder Teilchen erzeugen und die Flüssigkeitszelle mit dieser oder diesen beleuchten.

Die Photoelektronen p werden im Detektorsystem 90 analysiert. Hierfür enthält das Detektorsystem 90 eine Frontkappenelektrode 92, ein Linsensystem 94, einen halbkugelförmigen Energieanalysator 96 und einen Detektor 98.

Die Frontkappenelektrode 92 hat einen möglichst geringen Abstand von der Arbeitselektrode 13 der Flüssigkeitszelle 12, beispielsweise im Bereich von 0,2 mm bis 0,5 mm, damit möglichst viele von den von der Arbeitselektrode 13 der Flüssigkeitszelle 12 abgegebenen Photoelektronen p in eine Eingangsöffnung der Frontkappenelektrode 92 des Linsensystems 94 eintreten können. In diesem Ausführungsbeispiel hat die Frontkappenelektrode eine konische Form. Dies ermöglicht eine schnelle Druckreduktion innerhalb des Linsensystems 94. Zusätzlich sind noch weitere Vakuumpumpen vorgesehen, die den Druck innerhalb mehrerer hintereinander liegender Hohlräume des Linsensystems 94 verringern (nicht gezeigt). Dies ermöglicht es einen Betriebsdruck von beispielsweise 0,1 mbar bis 100 mbar im ersten Hohlraum 72 aufrechtzuerhalten, während in einem Hohlraum vor dem Detektor 98 lediglich ein absoluter Druck von $10^{-8}$ mbar bis $10^{-5}$ mbar, z.B. $10^{-6}$ mbar, herrscht. Dies ermöglicht es einen Verlust an Photoelektronen durch Stöße mit Gasmoleküle zu verringern, so dass die Signalqualität erhöht werden kann.

Das Linsensystem 94 dient dazu die Photoelektronen p zum halbkugelförmigen Energieanalysator 96 zu übertragen und diese so zu fokussieren, dass der halbkugelförmige Energieanalysator 96 die Photoelektronen p entsprechend ihren kinetischen Energien auftrennen kann. Hierfür kann das Linsensystem 94 verschiedene elektronenoptische Linsen und/oder Ablenker enthalten (nicht gezeigt). Die Photoelektronen p können dann von einem Detektor 98 detektiert werden. Der Detektor 98 kann zum Beispiel ein CMOS-Detektor sein. Mit dem Detektor 98 gemessene Einschlagspositionen der Photoelektronen p können dann einer entsprechenden kinetischen Energie zugeordnet werden, um die Photoelektronen p zu analysieren.

In anderen Ausführungsbeispielen kann das Detektorsystem auch ausgebildet sein andere aus der Flüssigkeitszelle abgegebene Teilchen oder Strahlung zu empfangen und zu analysieren.

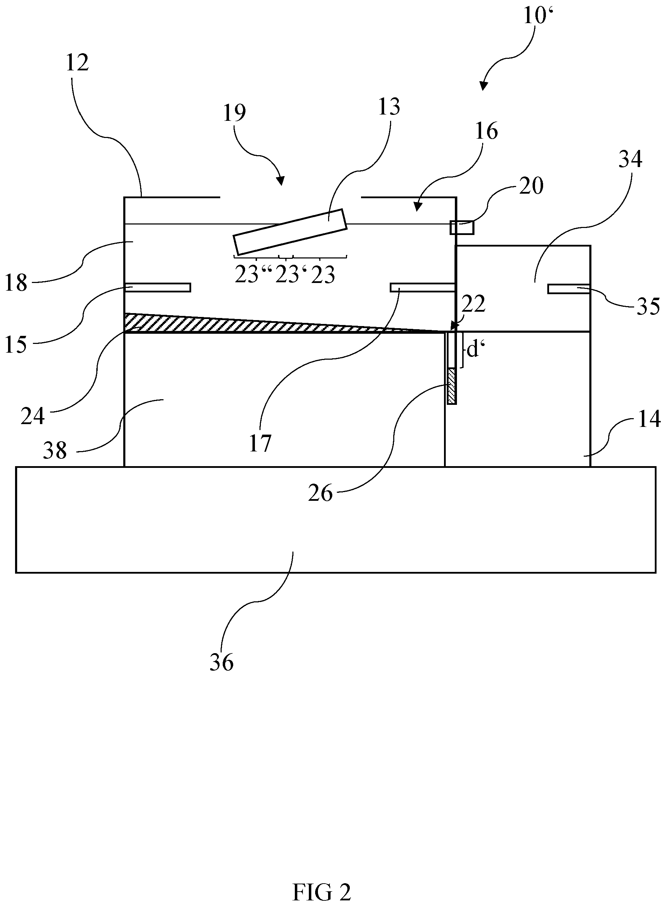

FIG 2 zeigt schematisch und exemplarisch einen Manipulatorkopf 10' gemäß eines zweiten Ausführungsbeispiels. Der Manipulatorkopf 10' enthält eine Flüssigkeitszelle 12 in Form einer elektrochemischen Zelle, eine Flüssigkeitspumpe 14 in Form einer Peristaltikpumpe, eine Befestigungsvorrichtung 34, eine Pufferzelle 36 und eine Temperierungsvorrichtung 38. Mit anderen Ausführungsbeispielen identische Komponenten sind mit identischen Bezugszeichen bezeichnet.

Die Flüssigkeitszelle 12 hat eine Arbeitselektrode 13, eine Gegenelektrode 15 und eine Referenzelektrode 17. Die Arbeitselektrode 13 ist mit einer Neigung zu der Flüssigkeitsoberfläche der Flüssigkeit 18 in der elektrochemischen Zelle 12 angeordnet. Die Neigung ist so gewählt, dass ein erster Teil 23 der Arbeitselektrode 13 aus der Flüssigkeit 18 herausragt, ein zweiter Teil 23' der Arbeitselektrode 13 von der Flüssigkeit 18 benetzt ist und ein dritter Teil 23" der Arbeitselektrode 13 sich innerhalb der Flüssigkeit 18 befindet. In anderen Ausführungsbeispielen kann ein relativer Neigungswinkel der Arbeitselektrode zur Flüssigkeitsoberfläche auch mit Hilfe einer Neigungsvorrichtung geändert werden. In einem anderen Ausführungsbeispiel kann auch beispielsweise die gesamte Flüssigkeitszelle geneigt werden, so, dass die Arbeitselektrode relativ zur Flüssigkeitsoberfläche geneigt wird. Der Manipulatorkopf und somit auch die Flüssigkeitszelle können beispielsweise von einem Manipulator geneigt werden, indem dessen verfahrbarer Schaft um einen bestimmten Winkel rotiert wird.

Des Weiteren hat die Flüssigkeitszelle 12 eine Öffnung 19, die einen Innenraum 16 der Flüssigkeitszelle 12 mit der Umgebung verbindet. Die Arbeitselektrode 13 ist unterhalb der Öffnung 19 angeordnet, so dass ein Detektorsystem an die Arbeitselektrode 13 herangefahren werden kann bzw. die Arbeitselektrode 13 an das Detektorsystem herangefahren werden kann.

Die Flüssigkeitszelle 12 hat einen Flüssigkeitszelleneinlass 20 zum Einführen der Flüssigkeit 18 und einen Flüssigkeitszellenauslass 22 zum Abführen der Flüssigkeit 18 aus der Flüssigkeitszelle 12. Auch in diesem Ausführungsbeispiel ist der Boden 24 mit einer Neigung versehen, so dass die Flüssigkeit 18 in Richtung des Flüssigkeitszellenauslasses 22 fließt. In diesem Ausführungsbeispiel ist die Flüssigkeitspumpe 14 unmittelbar mit dem Flüssigkeitszellenauslass 22 verbunden. Der Abstand d' zwischen dem Flüssigkeitszellenauslass 22 und dem Flüssigkeitspumpbereich entspricht in diesem Fall einer Wandstärke des Gehäuseteils das den Flüssigkeitszellenauslass 22 formt und einem kurzen Flüssigkeitsleitungsbereich vor einer Abdrückposition an der der Flüssigkeitspumpbereich 26 beginnt. In diesem Fall beträgt der Abstand d' zum Beispiel 1 mm.

Die Befestigungsvorrichtung 34 kann an einem Manipulator befestigt werden. In diesem Ausführungsbeispiel enthält die Befestigungsvorrichtung 34 eine Gewindebohrung 35, in die eine Schraube eingedreht werden kann, um den Manipulatorkopf 10 an einem Schaft eines Manipulators zu befestigen.

Die Pufferzelle 36 ist nach oben offen, so dass aus der Flüssigkeitszelle 12 herunterspritzende Flüssigkeit 18 in der Pufferzelle 36 aufgefangen werden kann.

Die Temperierungsvorrichtung 38 ist zwischen der Flüssigkeitszelle 12 und der Pufferzelle 36 angeordnet und enthält Heizungen und Kühlungen, um die Flüssigkeitszelle 12 und die Pufferzelle 36 zu temperieren.

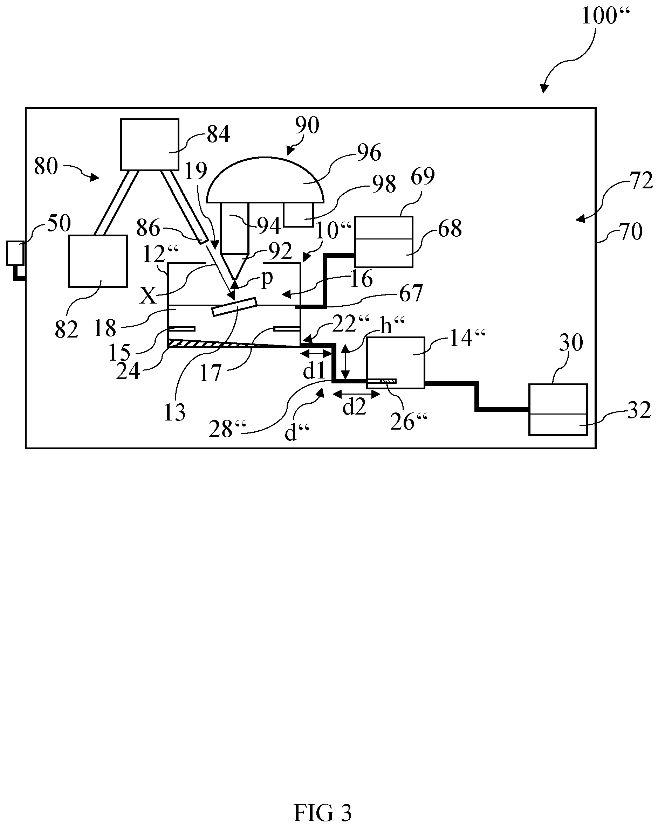

FIG 3 zeigt schematisch und exemplarisch ein zweites Ausführungsbeispiel des Unterdrucksystems in Form eines PES-Systems 100". Das PES-System 100" ist ähnlich zum in FIG 1 gezeigten PES-System 100. Mit den anderen Ausführungsbeispielen identische Bezugszeichen werden für identische Komponenten verwendet und für die Beschreibung der Funktion dieser Komponenten wird auf die Beschreibung zu FIG 1 verwiesen.

Das PES-System 100" enthält einen Manipulatorkopf 10", eine Vakuumpumpe 50, ein Unterdruckgehäuse 70 in Form einer Vakuumkammer, ein Beleuchtungssystem 80 in Form einer monochromatisierten Al-Röntgenstrahlungsquelle und ein Detektorsystem 90.

Im Gegensatz zum PES-System 100 ist der Manipulatorkopf 10" im PES-System 100" im Unterdruckgehäuse 70 befestigt und nicht am distalen Ende eines Manipulators. Der Manipulatorkopf 10" ist also in diesem Ausführungsbeispiel nicht mit dem Manipulator verfahrbar. Um das Beleuchtungssystem 80 und das Detektorsystem 90 auf die Arbeitselektrode 13 der Flüssigkeitszelle 12" des Manipulatorkopfs 10" auszurichten, müssen daher in diesem Ausführungsbeispiel das Beleuchtungssystem 80 und das Detektorsystem 90 entsprechend verfahren und ggf. geneigt werden. Hierfür sind entsprechende Aktoren (nicht gezeigt) vorgesehen. Alternativ können beispielsweise auch ein oder mehrere Deflektoren vorgesehen sein, die den Strahl oder die Teilchen vom Beleuchtungssystem auf die Arbeitselektrode ausrichten können (nicht gezeigt). Ferner befindet sich in diesem Ausführungsbeispiel auch das erste Flüssigkeitsreservoir 69 innerhalb des Unterdruckgehäuses 70, so dass auch die Flüssigkeitszuleitung 67 vollständig innerhalb des ersten Hohlraums 72 des Unterdruckgehäuses 70 verläuft.

Der Manipulatorkopf 10" enthält die Flüssigkeitszelle 12" und die Flüssigkeitspumpe 14", die über eine Flüssigkeitsleitung 28" miteinander verbunden sind.

Der Flüssigkeitszellenauslass 22" der Flüssigkeitszelle 12" ist im Bodenbereich an einer Wand der Flüssigkeitszelle 12" angeordnet. Der Abstand d" des Flüssigkeitszellenauslasses 22" der Flüssigkeitszelle 12" zum Flüssigkeitspumpbereich 26" der Flüssigkeitspumpe 14" setzt sich in diesem Ausführungsbeispiel aus den horizontalen Abständen d1 und d2 und dem vertikalen Abstand h" zusammen. Durch den vertikalen Abstand h" wirkt ein zusätzlicher hydrostatischer Druck durch die Flüssigkeitssäule der Flüssigkeit 18. Der Abstand d" ist so gewählt, dass der wirkende Druck größer ist als der Druckverlust zwischen dem Flüssigkeitszellenauslass 22" und dem Flüssigkeitspumpbereich 26", insbesondere entlang der Flüssigkeitsleitung 28", so dass die Flüssigkeit 18 sich in den Flüssigkeitspumpbereich 26" erstreckt und die Flüssigkeitspumpe 14" die Flüssigkeit 18 pumpen kann.

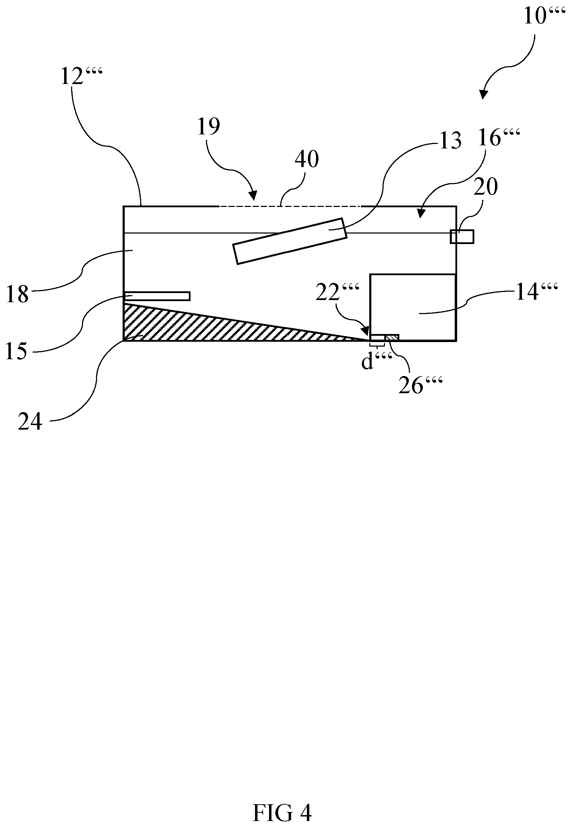

FIG 4 zeigt schematisch und exemplarisch einen Manipulatorkopf 10‴ gemäß eines vierten Ausführungsbeispiels.

Der Manipulatorkopf 10‴ enthält einer Flüssigkeitszelle 12‴ und eine Flüssigkeitspumpe 14‴. In diesem Ausführungsbeispiel sind die Flüssigkeitszelle 12‴ und die Flüssigkeitspumpe 14‴ in einem gemeinsamen Gehäuse angeordnet.

In dem Gehäuse befindet sich eine Öffnung 19, die durch ein transparentes Fenster 40 in Form einer Schicht Graphen von der Umgebung des Manipulatorkopfs 10‴ getrennt ist. Dies ermöglicht es ein Austreten von Flüssigkeit 18 durch die Öffnung 19 zu verhindern. Ferner ermöglicht dies in der Umgebung des Manipulatorkopfs 10‴ und innerhalb des Innenraums 16‴ einen unterschiedlichen Druck einzustellen. Beispielsweise kann in der Flüssigkeitszelle 12‴ ein höherer Druck herrschen als in der Umgebung des Manipulatorkopfs 10‴. Alternativ kann auch ein anderes transparentes Fenster vorgesehen sein, das für die Strahlung und Teilchen transparent ist, die aus dem Beleuchtungssystem einstrahlt und aus der Flüssigkeitszelle 12‴ abgegeben werden. Transparent bedeutet hier nicht, dass es keine Verluste im transparenten Fenster geben darf, sondern dass die Transmission relativ hoch, zum Beispiel über 90% ist. Ferner können alternativ anstatt einer Öffnung auch mehrere Öffnungen mit mehreren transparenten Fenstern vorgesehen sein, beispielsweise eine Öffnung für die auf die Flüssigkeitszelle einstrahlende Strahlung oder Teilchen und eine Öffnung für aus der Flüssigkeitszelle abgegebene Teilchen oder Strahlung. In diesem Fall können die transparenten Fenster auch von unterschiedlichen Materialien gebildet sein, die jeweils für die durch sie durchtretende Strahlung oder durch sie durchtretenden Teilchen transparent ist.

Die Flüssigkeitszelle 12‴ enthält eine geneigte Arbeitselektrode 13 und eine Gegenelektrode 15. Flüssigkeit 18 wird über den Flüssigkeitszelleneinlass 20 in den Innenraum 16‴ der Flüssigkeitszelle 12‴ eingeführt und über den Flüssigkeitszellenauslass 22‴ aus der Flüssigkeitszelle 12‴ in den Flüssigkeitspumpbereich 26‴ der Flüssigkeitspumpe 14‴ eingeführt. Ein Boden 24 mit einer Neigung sorgt dafür, dass die Flüssigkeit 18 in den Flüssigkeitszellenauslass 22‴ fließt. Der Abstand d‴ zwischen dem Flüssigkeitszellenauslass 22‴ der Flüssigkeitszelle 12‴ und dem Flüssigkeitspumpbereich 26‴ der Flüssigkeitspumpe 14‴ ist in diesem Fall ein horizontaler Abstand. Der Abstand d‴ ist so gewählt, dass sich die Flüssigkeit 18 bis in den Flüssigkeitspumpbereich 26‴ erstreckt und die Flüssigkeitspumpe 14‴ die Flüssigkeit 18 pumpen kann.

In anderen Ausführungsbeispielen kann auch die Flüssigkeitszelle geneigt werden, um die Flüssigkeit in den Flüssigkeitszellenauslass fließen zu lassen. In diesem Fall kann sich der Flüssigkeitszellenauslass auch an einer Wand der Flüssigkeitszelle, insbesondere ohne Bodenkontakt, befinden. Bevorzugt ist der Flüssigkeitszellenauslass so in der Wand angeordnet, dass bei Neigung der Flüssigkeitszelle, der Flüssigkeitszellenauslass sich an einem tiefsten Punkt des Innenraums der Flüssigkeitszelle befindet, so dass die Flüssigkeit aus diesem abfließt. In diesem Fall kann die Neigung so gewählt sein, dass die Arbeitselektrode auf das Beleuchtungssystem und das Detektorsystem ausgerichtet ist und eine Messung erfolgen kann.

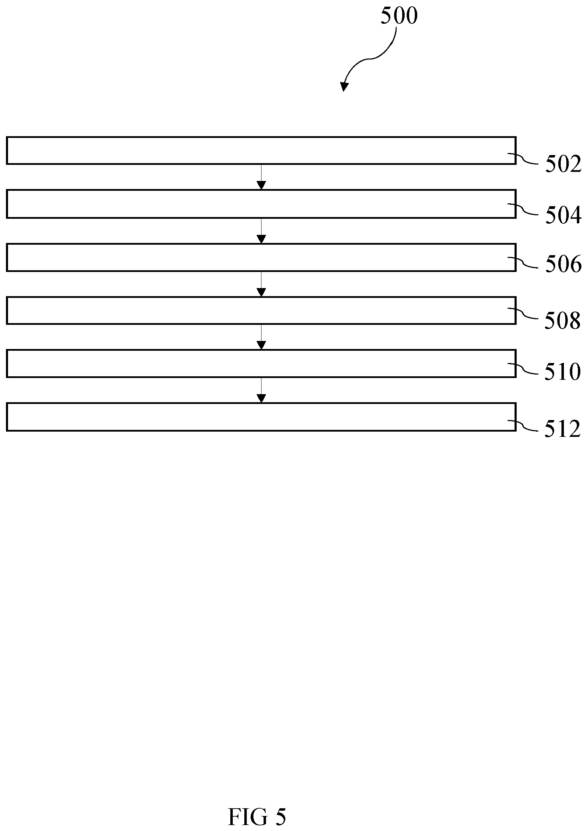

FIG 5 zeigt ein exemplarisches Flussdiagramm eines Ausführungsbeispiels eines Verfahrens 500 zum Betreiben eines Unterdrucksystems. Beispielsweise kann das in FIG 1 oder FIG 3 gezeigte Unterdrucksystem nach dem Verfahren betrieben werden.

In Schritt 502 wird ein absoluter Druck zwischen 0,1 mbar und 100 mbar, beispielsweise 25 mbar im Innenraum der Flüssigkeitszelle erzeugt. Hierfür wird die Vakuumpumpe verwendet, um Gas aus dem ersten Hohlraum des Unterdruckgehäuse herauszupumpen, der mit dem Innenraum der Flüssigkeitszelle fluidverbunden ist. In anderen Ausführungsbeispielen kann auch beispielsweise ein absoluter Druck von unter 600 mbar, von unter 400 mbar oder von 100 mbar oder weniger, beispielsweise von 1 mbar bis unter 600 mbar, von 1 mbar bis unter 400 mbar oder von 1 mbar bis 100 mbar, im Innenraum der Flüssigkeitszelle erzeugt werden.

In Schritt 504 wird die Flüssigkeit in der Flüssigkeitszelle bereitgestellt. Hierfür wird über den Flüssigkeitszelleneinlass die Flüssigkeit in die Flüssigkeitszelle eingeführt. Dies Flüssigkeit erstreckt sich bis in den Flüssigkeitspumpbereich der Flüssigkeitspumpe, so dass die Flüssigkeitspumpe die Flüssigkeit zum Zirkulieren der Flüssigkeit oder zum Entleeren der Flüssigkeitszelle pumpen kann.

In Schritt 506 wird die Flüssigkeit aus dem Flüssigkeitspumpbereich der Flüssigkeitspumpe mittels der Flüssigkeitspumpe gepumpt, so dass die Flüssigkeit aus der Flüssigkeitszelle gepumpt wird. Da in diesem Ausführungsbeispiel zeitgleich Flüssigkeit über den Flüssigkeitszelleneinlass der Flüssigkeitszelle zugeführt wird, kann ein ständiger Austausch der Flüssigkeit stattfinden. Anders ausgedrückt, werden in diesem Ausführungsbeispiel, die Schritte 504 und 506 so ausgeführt, dass ein bestimmtes Flüssigkeitsniveau innerhalb des Innenraums der Flüssigkeitszelle konstant gehalten wird.

In anderen Ausführungsbeispielen kann die Flüssigkeit in der Flüssigkeitszelle auch so bereitgestellt werden und die Flüssigkeit auch so aus dem Flüssigkeitspumpbereich der Flüssigkeitspumpe gepumpt werden, dass sich das Flüssigkeitsniveau innerhalb des Innenraums der Flüssigkeitszelle ändert, zum Beispiel kontinuierlich und/oder periodisch ändert. Dies kann es ermöglichen an einer Messstelle Messungen bei verschiedenen Flüssigkeitsniveaus durchzuführen.

In alternativen Ausführungsbeispielen kann die Flüssigkeitszelle auch zum Beispiel nach einer Messung entleert werden, um sie mit einer anderen Flüssigkeit zu befüllen.

In Schritt 508 werden die Flüssigkeitszelle, das Beleuchtungssystem und das Detektorsystem so zueinander angeordnet, dass die Flüssigkeitszelle mit der Röntgenstrahlung des Beleuchtungssystems beleuchtet werden kann und die Photoelektronen von dem Detektorsystem empfangen werden können. In anderen Ausführungsbeispielen können auch eine andere Strahlung oder Teilchen vom Beleuchtungssystem bereitgestellt werden und das Detektorsystem kann andere Teilchen oder eine Strahlung detektieren.

Im Fall des in FIG 1 gezeigten PES-Systems, wird die Flüssigkeitszelle entsprechend so mit Hilfe des Manipulators verfahren und geneigt, dass ein Strahlungsspot des Beleuchtungssystems auf eine zu messende Stelle der Arbeitselektrode der Flüssigkeitszelle ausgerichtet ist und eine Eingangsöffnung in das Detektorsystems über dem Strahlungsspot liegt, so dass die Photoelektronen in dieses eintreten können.

In anderen Ausführungsbeispielen, beispielsweise im Fall des in FIG 3 gezeigten PES-Systems, können das Beleuchtungssystem und das Detektorsystem so verfahren und geneigt werden, dass ein Strahlungsspot des Beleuchtungssystems auf eine zu messende Stelle der Arbeitselektrode der Flüssigkeitszelle ausgerichtet ist und eine Eingangsöffnung in das Detektorsystems über dem Strahlungsspot liegt, so dass die Photoelektronen in dieses eintreten können.

In Schritt 510 wird die Flüssigkeitszelle bzw. die zu messende Stelle der Arbeitselektrode der Flüssigkeitszelle mit der Röntgenstrahlung des Beleuchtungssystems beleuchtet. Hierdurch werden Photoelektronen erzeugt, die in das Detektorsystem eintreten. Um eine möglichst hohe Anzahl von Photoelektronen zu erzeugen, die ins Detektorsystem eintreten können, können verschiedene Parameter des Beleuchtungssystems optimiert werden.

In anderen Ausführungsbeispielen kann die Flüssigkeitszelle auch mit einer anderen Strahlung oder mit Teilchen bestrahlt werden, um eine Strahlung oder Teilchen zu erzeugen.

Es kann auch anstatt der Arbeitselektrode eine andere Elektrode der Flüssigkeitszelle bestrahlt werden oder die Flüssigkeit oder die mit Flüssigkeit benetzte Arbeitselektrode. Die Arbeitselektrode kann beispielsweise so geneigt werden, dass die Flüssigkeit einen Meniskus auf der Oberfläche der Arbeitselektrode erzeugt, so dass die Messung der Arbeitselektrode durch einen dünnen Flüssigkeitsfilm erfolgen kann.

Die Arbeitselektrode kann auch so geneigt werden, dass ein erster Teil der Arbeitselektrode aus der Flüssigkeit herausragt, ein zweiter Teil der Arbeitselektrode von der Flüssigkeit benetzt ist und ein dritter Teil der Arbeitselektrode sich innerhalb der Flüssigkeit befindet. Die Flüssigkeit kann in der elektrochemischen Zelle auch so bereitgestellt werden und die Flüssigkeit so aus dem Flüssigkeitspumpbereich der Flüssigkeitspumpe gepumpt werden, dass ein erster Teil der Arbeitselektrode im Betrieb aus der Flüssigkeit herausragt, ein zweiter Teil der Arbeitselektrode von der Flüssigkeit benetzt ist und ein dritter Teil der Arbeitselektrode sich innerhalb der Flüssigkeit befindet. In diesem Fall kann beispielsweise die Arbeitselektrode so mit Teilchen oder Strahlung vom Beleuchtungssystem beleuchtet werden, dass nacheinander der erste Teil der Arbeitselektrode, der aus der Flüssigkeit herausragt, der zweite Teil der Arbeitselektrode, der von der Flüssigkeit benetzt ist und der dritte Teil der Arbeitselektrode, der sich innerhalb der Flüssigkeit befindet, beleuchtet werden. Hierfür kann der Spot auf der Arbeitselektrode verfahren werden. Alternativ kann auch die Flüssigkeit so gepumpt werden, dass sich das Flüssigkeitsniveau so ändert, dass die Messungen mit Flüssigkeitsfilm und ohne Flüssigkeitsfilm auf der Arbeitselektrode nacheinander an derselben Messstelle stattfinden können, zum Beispiel indem das Flüssigkeitsniveau in der Flüssigkeitszelle erhöht wird.

In Schritt 512 werden die Photoelektronen, die aus der Flüssigkeitszelle bzw. von der zu messenden Stelle der Arbeitselektrode der Flüssigkeitszelle abgegeben wurden, im Detektorsystem detektiert. Um die Photoelektronen im Detektorsystem detektieren zu können, können verschiedene Parameter des Detektorsystems optimiert werden.

In anderen Ausführungsbeispielen können auch andere Teilchen oder eine Strahlung im Detektorsystem detektiert werden.

Die in den FIG 1 und 3 gezeigten Unterdrucksysteme 100 und 100', sowie das in FIG 5 gezeigt Verfahren können zum Beispiel verwendet werden für eine Oberflächenanalyse, eine Messung einer Oberflächenreaktion, eine Messung von Flüssigkeit-Feststoff-Reaktionen, eine Messung von Flüssigkeit-Gas-Reaktionen, eine Messung von Flüssigkeiten, eine Messung von dünnen Schichten, eine Detektion von Fremdsubstanzen in Flüssigkeiten, eine Photoemissionmessung, eine Photoelektronenspektroskopiemessung nahe am atmosphärischen Druck, eine Röntgenphotoelektronenspektroskopiemessung nahe am atmosphärischen Druck, eine elektrochemische Messung, eine Batterieanalyse, eine Oxidationsmessung, eine Elektrolytmessung, eine Elektrodenmessung, eine Probenmessung durch eine Flüssigkeit hindurch, eine Qualitätskontrolle, eine Korrosionsmessung, eine Katalysatormessung, eine druckabhängige Messung, eine Messung einer biologischen Probe, eine Potentiometrie-Messung, und/oder eine Messung einer supersaturierten Flüssigkeit.

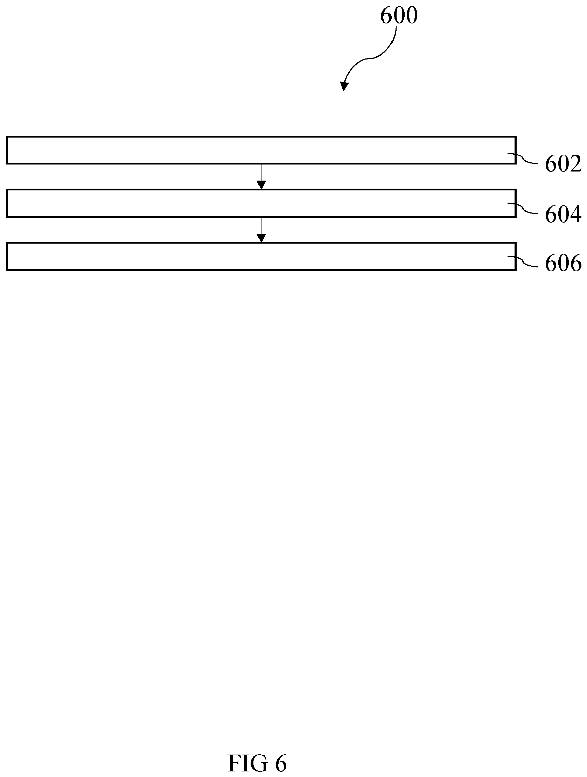

FIG 6 zeigt ein exemplarisches Flussdiagramm eines Ausführungsbeispiels eines Verfahrens 600 zum Herstellen des Manipulatorkopfs. Beispielsweise kann eines der Ausführungsbeispiele des in den Figuren 1, 2, 3 und 4 gezeigten Manipulatorkopfs 10, 10', 10" oder 10''' hergestellt werden.

In Schritt 602 wird eine Flüssigkeitszelle in Form einer elektrochemischen Zelle bereitgestellt. Hierfür wird ein Gehäuse mit vier Seitenwänden und einem Boden bereitgestellt, die einen Innenraum umschließen, der eine Flüssigkeit, insbesondere einen wasserbasierten Elektrolyten aufnehmen kann. Zusätzlich hat das Gehäuse einen Deckel mit einer Öffnung. Das Gehäuse ist für einen Betrieb in einem Unterdruck, insbesondere bei einem absoluten Druck von unter 600 mbar, beispielsweise einem absoluten Druck von 100 mbar oder weniger, geeignet. Optional können mehrere Elektroden in der Flüssigkeitszelle, zum Beispiel eine Arbeitselektrode, eine Referenzelektrode und eine Gegenelektrode, vorgesehen werden.

Ferner hat die Flüssigkeitszelle einen Flüssigkeitszelleneinlass, um Flüssigkeit in die Flüssigkeitszelle einzuführen und einen Flüssigkeitszellenauslass zum Herausführen von Flüssigkeit aus der Flüssigkeitszelle. In diesem Ausführungsbeispiel ist der Flüssigkeitszellenauslass im Boden der Flüssigkeitszelle an einem tiefsten Punkt des Bodens angeordnet, so dass dieser ähnlich zu einem Badewannenauslass als Auslauf für die Flüssigkeit dienen kann. Dadurch kann die Flüssigkeitszelle vollständig entleert werden. Optional ist der Boden in Richtung des Flüssigkeitszellenauslasses geneigt, zum Beispiel mit einem Neigungswinkel von 10°.

Da bei einem absoluten Druck von unter 600 mbar die Flüssigkeit - je nach Flüssigkeitsleitungsinnendurchmesser, Viskosität der Flüssigkeit und Länge der Flüssigkeitsleitung, nicht von selbst durch eine Flüssigkeitsleitung abfließen würde, ist ferner eine Flüssigkeitspumpe vorzusehen, um die Flüssigkeit abzupumpen.

In Schritt 604 wird eine Flüssigkeitspumpe in Form einer Peristaltikpumpe bereitgestellt. Die Flüssigkeitspumpe hat einen Flüssigkeitspumpbereich. In diesem Ausführungsbeispiel ist der Flüssigkeitspumpbereich von einem Teil einer Flüssigkeitsleitung in Form eines elastischen Schlauchs aus PEEK gebildet. Der Flüssigkeitspumpbereich erstreckt sich in diesem Ausführungsbeispiel von einem ersten Abdrückpunkt einer Rolle der Flüssigkeitspumpe bis zu einem zweiten Punkt, der einem Abstand der Rollen voneinander entspricht, so dass wenn die Rolle den Schlauch abdrückt, Flüssigkeit durch das Verfahren der Rolle entlang des Schlauchs transportiert wird. Anders ausgedrückt, kann die Flüssigkeitspumpe die Flüssigkeit, die sich in den Flüssigkeitspumpbereich der Flüssigkeitspumpe erstreckt, pumpen.

In Schritt 606 wird, ein Abstand zwischen dem Flüssigkeitszellenauslass der Flüssigkeitszelle und dem Flüssigkeitspumpbereich der Flüssigkeitspumpe so gewählt, dass sich die Flüssigkeit bei einem absoluten Druck zwischen 1 mbar und 100 mbar im Innenraum der Flüssigkeitszelle wenigstens bis in den Flüssigkeitspumpbereich erstreckt, so dass die Flüssigkeitspumpe die Flüssigkeit pumpen kann. Dies stellt sicher, dass die Flüssigkeit aus dem Flüssigkeitspumpbereich abgepumpt werden kann. In anderen Ausführungsbeispielen kann der Abstand zwischen dem Flüssigkeitszellenauslass und dem Flüssigkeitspumpbereich auch so gewählt werden, dass sich die Flüssigkeit bei einem absoluten Druck von unter 600 mbar, von unter 400 mbar oder von 100 mbar oder weniger im Innenraum der Flüssigkeitszelle wenigstens bis in den Flüssigkeitspumpbereich erstreckt, so dass die Flüssigkeitspumpe die Flüssigkeit pumpen kann.

Der Abstand kann aus einem vertikalen und einem horizontalen Abstand zusammengesetzt sein. Beispielsweise kann für feste andere Parameter, zum Beispiel Flüssigkeitsleitungsinnendurchmesser, Material der Flüssigkeitsleitung, gewünschter absoluter Druck im Innenraum der Flüssigkeitszelle, und Viskosität der Flüssigkeit, der Abstand zwischen dem Flüssigkeitszellenauslass und dem Flüssigkeitspumpbereich verkleinert werden, bis die Flüssigkeitspumpe die Flüssigkeit pumpen kann. Hierfür kann beispielsweise eine Länge der Flüssigkeitsleitung zwischen dem Flüssigkeitszellenauslass und dem Flüssigkeitspumpbereich verringert werden, bis Flüssigkeit gepumpt werden kann. Dies kann einerseits experimentell geschehen, aber auch berechnet werden, beispielsweise durch Simulation oder auf Basis der Bernoulli-Gleichung.

Die oben gegebene Beschreibung der Erfindung in Verbindung mit den Zeichnungen dient dazu die Merkmale der Erfindung in Form von Ausführungsbeispielen beispielhaft zu erläutern. Die in den Ausführungsbeispielen erläuterten Merkmale sind jedoch nur beispielhaft und sollen nicht als einschränkend verstanden werden. Insbesondere ist die Erfindung nicht auf die Ausführungsbeispiele oder die Merkmalskombination einzelner Ausführungsbeispiele beschränkt. Beispielsweise ist es auch möglich die Erfindung in einem Ausführungsbeispiel mit einem anderen Beleuchtungssystem, beispielsweise mit einer Synchrotronstrahlungsquelle oder einem anderen Detektorsystem zu betreiben.

Andere Varianten und Variationen der gezeigten Ausführungsbeispiele können vom Fachmann nachvollzogen und ausgeführt werden, indem er bzw. sie die beanspruchte Erfindung in Anbetracht der Figuren, Beschreibung und Ansprüche nacharbeitet.

Die Worte "enthalten", "aufweisen", "umfassen" schließen weitere Elemente, Komponenten oder Schritte nicht aus und die unbestimmten Artikel "ein" bzw. "eine" schließen eine Vielzahl nicht aus.

Die Tatsache, dass bestimmte Mittel in voneinander verschiedenen Ansprüchen genannt sind, ist nicht derart zu verstehen, dass eine Kombination dieser Mittel nicht vorteilhaft verwendet werden kann.

Die Bezugszeichen, die in den Ansprüchen verwendet werden, sind nicht als einschränkend auf die Merkmale der Ausführungsbeispiele, sondern lediglich beispielhaft für die Merkmale der Ansprüche zu verstehen.

Die Erfindung betrifft Pumpen von Flüssigkeiten in einem Unterdrucksystem bei einem Unterdruck, insbesondere bei einem absoluten Druck von unter 600 mbar. Hierfür ist ein Manipulatorkopf zur Verwendung in einem Unterdruckgehäuse bei Unterdruck vorgesehen. Der Manipulatorkopf enthält eine Flüssigkeitszelle und eine Flüssigkeitspumpe. Die Flüssigkeitszelle hat einen Flüssigkeitszellenauslass und einen für Unterdruck ausgebildeten Innenraum, der ausgebildet ist eine Flüssigkeit aufzunehmen. Die Flüssigkeitspumpe weist einen mit dem Flüssigkeitszellenauslass fluidverbundenen Flüssigkeitspumpbereich auf und ist zum Pumpen der Flüssigkeit aus dem Flüssigkeitspumpbereich bei Unterdruck im Innenraum der Flüssigkeitszelle ausgebildet. Ein Abstand zwischen dem Flüssigkeitszellenauslass der Flüssigkeitszelle und dem Flüssigkeitspumpbereich der Flüssigkeitspumpe ist so gewählt, dass die Flüssigkeit sich bei einem absoluten Druck von unter 600 mbar im Innenraum der Flüssigkeitszelle wenigstens bis in den Flüssigkeitspumpbereich der Flüssigkeitspumpe erstreckt, so dass diese die Flüssigkeit pumpen kann. Dies ermöglicht einen kompakten Aufbau für ein Unterdrucksystem, das Flüssigkeit bei einem absoluten Druck von unter 600 mbar zirkulieren kann und insbesondere auch entleert werden kann.

**Patentansprüche**

1. Manipulatorkopf (10; 10'; 10"; 10‴), wobei der Manipulatorkopf (10; ...; 10‴) zur Verwendung in einem Unterdruckgehäuse (70) bei Unterdruck ausgebildet ist und aufweist:

   - eine Flüssigkeitszelle (12; 12"; 12‴) mit einem Flüssigkeitszellenauslass (22; 22"; 22‴) und einem für Unterdruck ausgebildeten Innenraum (16), der ausgebildet ist eine Flüssigkeit (18) aufzunehmen, und
   - eine Flüssigkeitspumpe (14; 14"; 14‴), die einen mit dem Flüssigkeitszellenauslass (22; 22"; 22‴) fluidverbundenen Flüssigkeitspumpbereich (26; 26"; 26‴) aufweist und die zum Pumpen der Flüssigkeit (18) aus dem Flüssigkeitspumpbereich (26; 26"; 26‴) bei Unterdruck im Innenraum (16) der Flüssigkeitszelle (12; 12"; 12‴) ausgebildet ist,

      wobei ein Abstand (d; d'; d"; d‴) zwischen dem Flüssigkeitszellenauslass (22; 22"; 22‴) der Flüssigkeitszelle (12; 12"; 12‴) und dem Flüssigkeitspumpbereich (26; 26"; 26‴) der Flüssigkeitspumpe (14; 14"; 14‴) so gewählt ist, dass die Flüssigkeit (18) sich bei einem absoluten Druck von unter 600 mbar, bevorzugt von unter 400 mbar, insbesondere von 100 mbar oder weniger, im Innenraum (16) der Flüssigkeitszelle (12; 12"; 12‴) wenigstens bis in den Flüssigkeitspumpbereich (26; 26"; 26‴) der Flüssigkeitspumpe (14; 14"; 14‴) erstreckt, so dass diese die Flüssigkeit (18) pumpen kann, und

      wobei die Flüssigkeitszelle (12; 12"; 12‴) eine elektrochemische Zelle ist, die eine Arbeitselektrode (13) und eine Gegenelektrode (15) aufweist.

2. Manipulatorkopf (10; 10'; 10") gemäß Anspruch 1, wobei der Flüssigkeitszellenauslass (22; 22") in einem Bodenbereich der Flüssigkeitszelle (12; 12"), insbesondere an einem tiefsten Punkt des Innenraums (16) der Flüssigkeitszelle (12; 12"), angeordnet ist und wobei der Flüssigkeitszellenauslass (22; 22") der Flüssigkeitszelle (12; 12") zum Flüssigkeitspumpbereich (26; 26") der Flüssigkeitspumpe (14; 14") mit einem vertikalen Abstand (d; d'; h") angeordnet ist, der so gewählt ist, dass die Flüssigkeit (18) sich bei einem absoluten Druck von unter 600 mbar, bevorzugt von unter 400 mbar, insbesondere von 100 mbar oder weniger, im Innenraum (16) der Flüssigkeitszelle (12; 12") wenigstens bis in den Flüssigkeitspumpbereich (26; 26") der Flüssigkeitspumpe (14; 14") erstreckt, so dass diese die Flüssigkeit (18) pumpen kann.

3. Manipulatorkopf (10; ...; 10‴) gemäß Anspruch 1 oder 2, wobei ein Boden der Flüssigkeitszelle (12; 12"; 12‴) eine Neigung in Richtung des Flüssigkeitszellenauslasses (22; 22"; 22‴) aufweist und wobei die Neigung so gewählt ist, dass die Flüssigkeit (18) in Richtung des Flüssigkeitszellenauslasses (22; 22"; 22‴) fließt.

4. Manipulatorkopf (10; ...; 10‴) gemäß wenigstens einem der Ansprüche 1 bis 3, wobei die Flüssigkeitspumpe (14; 14"; 14‴) eine Verdrängerpumpe, insbesondere eine Peristaltikpumpe, aufweist.

5. Manipulatorkopf (10; ...; 10‴) gemäß wenigstens einem der Ansprüche 1 bis 4, wobei die Arbeitselektrode (13) mit einer Neigung zu einer Flüssigkeitsoberfläche in der elektrochemischen Zelle (12;

12"; 12''') angeordnet ist, die so gewählt ist, dass ein erster Teil (23) der Arbeitselektrode (13) im Betrieb aus der Flüssigkeit (18) herausragen, ein zweiter Teil (23') der Arbeitselektrode (13) von der Flüssigkeit (18) benetzt sein und ein dritter Teil (23") der Arbeitselektrode (13) sich innerhalb der Flüssigkeit (18) befinden kann.

6. Manipulator (60) mit einem Manipulatorinnenraum (62), der ausgebildet ist mit einem Unterdruckgehäuse (70) hermetisch verbunden zu werden, wobei der Manipulator (60) einen verfahrbaren Schaft (64) mit einem distalen Ende (65) aufweist, das in einem mit dem Unterdruckgehäuse (70) verbundenen Zustand des Manipulators (60) in einem Hohlraum (72) des Unterdruckgehäuses (70) verfahrbar ist, wobei das distale Ende (65) des verfahrbaren Schafts (64) den Manipulatorkopf (10) gemäß wenigstens einem der Ansprüche 1 bis 5 aufweist, so dass der Manipulatorkopf (10) in einem mit dem Unterdruckgehäuse (70) verbundenen Zustand des Manipulators (60) in dem Hohlraum (72) des Unterdruckgehäuses (70) angeordnet ist.

7. Unterdrucksystem (100; 100") , das aufweist:

   - ein Unterdruckgehäuse (70) zum hermetischen Umschließen eines ersten Hohlraums (72) bei einem Unterdruck und
   - einen Manipulatorkopf (10; ...; 10''') gemäß wenigstens einem der Ansprüche 1 bis 5.

8. Unterdrucksystem (100), das aufweist:

   - ein Unterdruckgehäuse (70) zum hermetischen Umschließen eines ersten Hohlraums (72) bei einem Unterdruck und
   - einen Manipulator (60) gemäß Anspruch 6.

9. Unterdrucksystem (100; 100") gemäß Anspruch 7 oder 8, das aufweist:

   - ein Beleuchtungssystem (80), das ausgebildet ist die Flüssigkeitszelle (12; 12"; 12''') mit Teilchen oder einer Strahlung (X) zu beleuchten und
   - ein Detektorsystem (90), das ausgebildet ist aus der Flüssigkeitszelle (12; 12"; 12''') abgegebene Teilchen (p) oder Strahlung zu empfangen.

10. Verfahren zum Herstellen eines Manipulatorkopfs (600), umfassend die Schritte:

    - Bereitstellen einer Flüssigkeitszelle mit einem Flüssigkeitszellenauslass und einem für Unterdruck ausgebildeten Innenraum, der ausgebildet ist eine Flüssigkeit aufzunehmen (602), wobei die Flüssigkeitszelle eine elektrochemische Zelle ist, die eine Arbeitselektrode und eine Gegenelektrode aufweist,
    - Bereitstellen einer Flüssigkeitspumpe, die einen mit dem Flüssigkeitszellenauslass fluidverbundenen Flüssigkeitspumpbereich aufweist und die zum Pumpen der Flüssigkeit aus dem Flüssigkeitspumpbereich bei Unterdruck im Innenraum der Flüssigkeitszelle ausgebildet ist (604), und
    - Wählen eines Abstands zwischen dem Flüssigkeitszellenauslass der Flüssigkeitszelle und dem Flüssigkeitspumpbereich der Flüssigkeitspumpe so, dass die Flüssigkeit sich bei einem absoluten Druck von unter 600 mbar, bevorzugt von unter 400 mbar, insbesondere von 100 mbar oder weniger, im Innenraum der Flüssigkeitszelle wenigstens bis in den Flüssigkeitspumpbereich der Flüssigkeitspumpe erstreckt, so dass diese die Flüssigkeit pumpen kann (606).

11. Verfahren zum Betreiben des Unterdrucksystems (500) gemäß Anspruch 9, umfassend die Schritte:

    - Erzeugen eines absoluten Drucks von unter 600 mbar, bevorzugt von unter 400 mbar, insbesondere von 100 mbar oder weniger im Innenraum der Flüssigkeitszelle (502),
    - Bereitstellen der Flüssigkeit in der Flüssigkeitszelle (504),
    - Pumpen der Flüssigkeit aus dem Flüssigkeitspumpbereich der Flüssigkeitspumpe mittels der Flüssigkeitspumpe, so dass die Flüssigkeit aus der Flüssigkeitszelle gepumpt wird (506),
    - Anordnen der Flüssigkeitszelle, des Beleuchtungssystems und des Detektorsystems so zueinander, dass die Flüssigkeitszelle mit Teilchen oder Strahlung von dem Beleuchtungssystem beleuchtet werden kann und Strahlung oder Teilchen von dem Detektorsystem empfangen werden können (508),
    - Beleuchten der Flüssigkeitszelle mit Teilchen oder einer Strahlung des Beleuchtungssystems (510) und

      - Detektieren von Strahlung oder Teilchen, die aus der Flüssigkeitszelle abgegeben wurden, in dem Detektorsystem (512).

12. Verfahren gemäß Anspruch 11, das einen oder mehrerer der Schritte umfasst:

    - Verfahren und/oder Neigen der Flüssigkeitszelle mittels des Manipulators, um die Flüssigkeitszelle, das Beleuchtungssystem und das Detektorsystem so zueinander anzuordnen, dass die Flüssigkeitszelle mit Teilchen oder Strahlung von dem Beleuchtungssystem beleuchtet werden kann und Strahlung oder Teilchen von dem Detektorsystem empfangen werden können,

- Bereitstellen der Flüssigkeit in der Flüssigkeitszelle während des Pumpens der Flüssigkeit aus dem Flüssigkeitspumpbereich der Flüssigkeitspumpe,

- Bereitstellen der Flüssigkeit in der Flüssigkeitszelle und Pumpen der Flüssigkeit aus dem Flüssigkeitspumpbereich der Flüssigkeitspumpe so, dass ein bestimmtes Flüssigkeitsniveau innerhalb des Innenraums der Flüssigkeitszelle konstant gehalten wird,

- Bereitstellen der Flüssigkeit in der Flüssigkeitszelle und Pumpen der Flüssigkeit aus dem Flüssigkeitspumpbereich der Flüssigkeitspumpe so, dass das Flüssigkeitsniveau innerhalb des Innenraums der Flüssigkeitszelle geändert wird,

- Neigen der Arbeitselektrode der elektrochemischen Zelle so, dass ein erster Teil der Arbeitselektrode im Betrieb aus der Flüssigkeit herausragen, ein zweiter Teil der Arbeitselektrode von der Flüssigkeit benetzt sein und ein dritter Teil der Arbeitselektrode sich innerhalb der Flüssigkeit befinden kann,

- Bereitstellen der Flüssigkeit in der elektrochemischen Zelle und Pumpen der Flüssigkeit aus dem Flüssigkeitspumpbereich der Flüssigkeitspumpe so, dass ein erster Teil der Arbeitselektrode im Betrieb aus der Flüssigkeit herausragt, ein zweiter Teil der Arbeitselektrode von der Flüssigkeit benetzt ist und ein dritter Teil der Arbeitselektrode sich innerhalb der Flüssigkeit befindet,

- Beleuchten der Arbeitselektrode der elektrochemischen Zelle mit Teilchen oder einer Strahlung von dem Beleuchtungssystem, so dass nacheinander der erste Teil der Arbeitselektrode, der im Betrieb aus der Flüssigkeit herausragt, der zweite Teil der Arbeitselektrode, der von der Flüssigkeit benetzt ist und der dritte Teil der Arbeitselektrode, der sich innerhalb der Flüssigkeit befindet, beleuchtet werden.

13. Verwendung des Unterdrucksystems (100; 100") gemäß Anspruch 9 für:

- eine Oberflächenanalyse,
- eine Messung einer Oberflächenreaktion,
- eine Messung von Flüssigkeit-Feststoff-Reaktionen,
- eine Messung von Flüssigkeit-Gas-Reaktionen,
- eine Messung von Flüssigkeiten,
- eine Messung von dünnen Schichten,
- eine Detektion von Fremdsubstanzen in Flüssigkeiten,
- eine Photoemissionmessung,
- eine Photoelektronenspektroskopiemessung nahe am atmosphärischen Druck,
- eine Röntgenphotoelektronenspektroskopiemessung nahe am atmosphärischen Druck,
- eine elektrochemische Messung,
- eine Batterieanalyse,
- eine Oxidationsmessung,
- eine Elektrolytmessung,
- eine Elektrodenmessung,
- eine Probenmessung durch eine Flüssigkeit hindurch,
- eine Qualitätskontrolle,
- eine Korrosionsmessung,
- eine Katalysatormessung,
- eine druckabhängige Messung,
- eine Messung einer biologischen Probe,
- eine Potentiometrie-Messung,
- eine Messung einer supersaturierten Flüssigkeit.

14. Verwendung des Verfahrens (500) gemäß Anspruch 11 oder 12 für:

- eine Oberflächenanalyse,
- eine Messung einer Oberflächenreaktion,
- eine Messung von Flüssigkeit-Feststoff-Reaktionen,
- eine Messung von Flüssigkeit-Gas-Reaktionen,
- eine Messung von Flüssigkeiten,
- eine Messung von dünnen Schichten,
- eine Detektion von Fremdsubstanzen in Flüssigkeiten,
- eine Photoemissionmessung,
- eine Photoelektronenspektroskopiemessung nahe am atmosphärischen Druck,
- eine Röntgenphotoelektronenspektroskopiemessung nahe am atmosphärischen Druck,
- eine elektrochemische Messung,
- eine Batterieanalyse,
- eine Oxidationsmessung,
- eine Elektrolytmessung,
- eine Elektrodenmessung,
- eine Probenmessung durch eine Flüssigkeit hindurch,
- eine Qualitätskontrolle,
- eine Korrosionsmessung,
- eine Katalysatormessung,
- eine druckabhängige Messung,
- eine Messung einer biologischen Probe,
- eine Potentiometrie-Messung,
- eine Messung einer supersaturierten Flüssigkeit.

15. Computerprogrammprodukt zum Betreiben des Unterdrucksystems gemäß Anspruch 9, wobei das Computerprogrammprodukt Computerprogrammcodemittel enthält, die einen Prozessor veranlassen das Verfahren gemäß Anspruch 11 oder 12 auszuführen, wenn das Computerprogrammprodukt auf dem Prozessor ausgeführt wird.

**Claims**

1. Manipulator head (10; 10'; 10"; 10'''), wherein the manipulator head (10; ...; 10''') is configured for use in a vacuum housing (70) at a negative pressure and has:

   - a liquid cell (12; 12"; 12''') with a liquid cell outlet (22; 22"; 22''') and an interior space (16) configured for negative pressure, which is configured to receive a liquid (18), and
   - a liquid pump (14; 14"; 14''') which has a liquid pumping region (26; 26"; 26''') fluidically connected to the liquid cell outlet (22; 22"; 22''') and which is configured to pump the liquid (18) out of the liquid pumping region (26; 26"; 26''') when there is negative pressure in the interior space (16) of the liquid cell (12; 12"; 12'''), wherein a distance (d; d'; d"; d''') between the liquid cell outlet (22; 22"; 22''') of the liquid cell (12; 12"; 12''') and the liquid pumping region (26; 26"; 26''') of the liquid pump (14; 14"; 14''') is selected such that at an absolute pressure of below 600 mbar, preferably below 400 mbar, in particular 100 mbar or less, the liquid (18) extends in the interior space (16) of the liquid cell (12; 12"; 12''') at least into the liquid pumping region (26; 26"; 26''') of the liquid pump (14; 14"; 14'''), so that the latter can pump the liquid (18), and
   wherein the liquid cell (12; 12"; 12''') is an electrochemical cell having a working electrode (13) and a counter-electrode (15).

2. Manipulator head (10; 10'; 10") according to claim 1, wherein the liquid cell outlet (22; 22") is arranged in a bottom region of the liquid cell (12; 12"), in particular at a lowest point of the interior space (16) of the liquid cell (12; 12"), and wherein the liquid cell outlet (22; 22") of the liquid cell (12; 12") is arranged relative to the liquid pump region (26; 26") of the liquid pump (14; 14") with a vertical distance (d; d'; h") which is selected such that, at an absolute pressure of below 600 mbar, preferably below 400 mbar, in particular 100 mbar or less, the liquid (18) extends in the interior space (16) of the liquid cell (12; 12") at least into the liquid pump region (26; 26") of the liquid pump (14; 14") so that the latter can pump the liquid (18).

3. Manipulator head (10; ...; 10''') according to claim 1 or 2, wherein a base of the liquid cell (12; 12"; 12''') has an inclination in the direction of the liquid cell outlet (22; 22"; 22''') and wherein the inclination is selected such that the liquid (18) flows in the direction of the liquid cell outlet (22; 22"; 22''').

4. Manipulator head (10; ...; 10''') according to at least one of claims 1 to 3, wherein the liquid pump (14; 14"; 14''') has a positive displacement pump, in particular a peristaltic pump.

5. Manipulator head (10; ...; 10''') according to at least one of claim 1 to 4, wherein the working electrode (13) is arranged with an inclination to a liquid surface in the electrochemical cell (12; 12"; 12'''), which is selected such that a first part (23) of the working electrode (13) can protrude from the liquid (18) during operation, a second part (23') of the working electrode (13) can be wetted by the liquid (18) and a third part (23") of the working electrode (13) can be located within the liquid (18).

6. Manipulator (60) with a manipulator interior space (62) which is configured to be hermetically connected to a vacuum housing (70), wherein the manipulator (60) has a movable shaft (64) with a distal end (65) which can be moved in a cavity (72) of the vacuum housing (70) when the manipulator (60) is connected to the vacuum housing (70), wherein the distal end (65) of the movable shaft (64) has the manipulator head (10) according to at least one of claims 1 to 5, so that the manipulator head (10) is arranged in the cavity (72) of the vacuum housing (70) when the manipulator (60) is connected to the vacuum housing (70).

7. Vacuum system (100; 100"), having:

   - a vacuum housing (70) for hermetically enclosing a first cavity (72) at a negative pressure and
   - a manipulator head (10; ...; 10''') according to at least one of claims 1 to 5.

8. Vacuum system (100) having:

   - a vacuum housing (70) for hermetically enclosing a first cavity (72) at a negative pressure and
   - a manipulator (60) according to claim 6.

9. Vacuum system (100; 100") according to claim 7 or 8, having:

   - an illumination system (80) configured to illuminate the liquid cell (12; 12"; 12''') with particles or radiation (X) and
   - a detector system (90) configured to receive particles (p) or radiation emitted from the liquid cell (12; 12"; 12''').

10. Method for manufacturing a manipulator head (600), comprising the steps:

- providing a liquid cell with a liquid cell outlet and an interior space configured for negative pressure, which is configured to receive a liquid (602), wherein the liquid cell is an electrochemical cell having a working electrode and a counter-electrode,

- providing a liquid pump which has a liquid pumping region fluidically connected to the liquid cell outlet and which is configured to pump the liquid from the liquid pumping region when there is negative pressure in the interior space of the liquid cell (604), and

- selecting a distance between the liquid cell outlet of the liquid cell and the liquid pumping region of the liquid pump such that, at an absolute pressure of below 600 mbar, preferably below 400 mbar, in particular 100 mbar or less, the liquid extends in the interior space of the liquid cell at least into the liquid pumping region of the liquid pump so that the latter can pump the liquid (606).

11. A method for operating the vacuum system (500) according to claim 9, comprising the steps:

- generating an absolute pressure of below 600 mbar, preferably below 400 mbar, in particular 100 mbar or less in the interior space of the liquid cell (502),

- providing the liquid in the liquid cell (504),

- pumping the liquid from the liquid pumping region of the liquid pump by means of the liquid pump so that the liquid is pumped out of the liquid cell (506),

- arranging the liquid cell, the illumination system and the detector system in relation to one another such that the liquid cell can be illuminated with particles or radiation from the illumination system and radiation or particles can be received by the detector system (508),

- illuminating the liquid cell with particles or radiation from the illumination system (510) and

- detecting radiation or particles emitted from the liquid cell in the detector system (512).

12. Method according to claim 11, comprising one or more of the steps:

- moving and/or inclining the liquid cell by means of the manipulator in order to arrange the liquid cell, the illumination system and the detector system in relation to one another in such a way that the liquid cell can be illuminated with particles or radiation from the illumination system and radiation or particles can be received by the detector system,

- providing the liquid in the liquid cell while pumping the liquid from the liquid pumping region of the liquid pump,

- providing the liquid in the liquid cell and pumping the liquid from the liquid pumping region of the liquid pump so that a certain liquid level is kept constant within the interior space of the liquid cell,

- providing the liquid in the liquid cell and pumping the liquid from the liquid pumping region of the liquid pump so that the liquid level within the interior space of the liquid cell is changed,

- inclining the working electrode of the electrochemical cell so that a first part of the working electrode can protrude from the liquid during operation, a second part of the working electrode can be wetted by the liquid and a third part of the working electrode can be located within the liquid,

- providing the liquid in the electrochemical cell and pumping the liquid from the liquid pumping region of the liquid pump such that a first part of the working electrode protrudes from the liquid during operation, a second part of the working electrode is wetted by the liquid and a third part of the working electrode is located within the liquid,

- illuminating the working electrode of the electrochemical cell with particles or radiation from the illumination system so that the first part of the working electrode which protrudes from the liquid during operation, the second part of the working electrode which is wetted by the liquid and the third part of the working electrode which is located within the liquid are illuminated one after the other.

13. Use of the vacuum system (100; 100") according to claim 9 for:

- a surface analysis,
- a measurement of a surface reaction,
- a measurement of liquid-solid reactions,
- a measurement of liquid-gas reactions,
- a measurement of liquids,
- a measurement of thin layers,
- a detection of foreign substances in liquids,
- a photoemission measurement,
- a photoelectron spectroscopy measurement close to atmospheric pressure,
- an X-ray photoelectron spectroscopy measurement close to atmospheric pressure,
- an electrochemical measurement,
- a battery analysis,
- an oxidation measurement,
- an electrolyte measurement,
- an electrode measurement,
- a sample measurement through a liquid,
- a quality control,
- a corrosion measurement,

- a catalyst measurement,
- a pressure-dependent measurement,
- a measurement of a biological sample,
- a potentiometry measurement,
- a measurement of a supersaturated liquid.

14. Use of the method (500) according to claim 11 or 12 for:

  - a surface analysis,
  - a measurement of a surface reaction,
  - a measurement of liquid-solid reactions,
  - a measurement of liquid-gas reactions,
  - a measurement of liquids,
  - a measurement of thin layers,
  - a detection of foreign substances in liquids,
  - a photoemission measurement,
  - a photoelectron spectroscopy measurement close to atmospheric pressure,
  - an X-ray photoelectron spectroscopy measurement close to atmospheric pressure,
  - an electrochemical measurement,
  - a battery analysis,
  - an oxidation measurement,
  - an electrolyte measurement,
  - an electrode measurement,
  - a sample measurement through a liquid,
  - a quality control,
  - a corrosion measurement,
  - a catalyst measurement,
  - a pressure-dependent measurement,
  - a measurement of a biological sample,
  - a potentiometry measurement,
  - a measurement of a supersaturated liquid.

15. Computer program product for operating the vacuum system according to claim 9, wherein the computer program product contains computer program code means that cause a processor to execute the method according to claim 11 or 12, when the computer program product is executed on the processor.

**Revendications**

1. Tête de manipulateur (10; 10'; 10"; 10‴), dans laquelle la tête de manipulateur (10; ...; 10‴) est configurée pour une utilisation dans une enceinte à vide (70) à une pression négative et comprend:

  - une cellule liquide (12; 12"; 12‴) avec une sortie de cellule liquide (22; 22"; 22‴) et un espace intérieur (16) configuré pour une pression négative, qui est configuré pour recevoir un liquide (18), et
  - une pompe à liquide (14; 14"; 14‴) qui comporte une zone de pompage de liquide (26; 26"; 26‴) en communication fluidique avec la sortie de cellule liquide (22; 22"; 22‴) et qui est configurée pour pomper le liquide (18) hors de la zone de pompage de liquide (26; 26"; 26‴) lorsqu'il y a une pression négative dans l'espace intérieur (16) de la cellule liquide (12; 12"; 12‴), dans laquelle une distance (d; d'; d"; d‴) entre la sortie de cellule liquide (22; 22"; 22‴) de la cellule liquide (12; 12"; 12‴) et la zone de pompage de liquide (26; 26"; 26‴) de la pompe à liquide (14; 14"; 14‴) est choisie de sorte qu'à une pression absolue inférieure à 600 mbar, de préférence inférieure à 400 mbar, en particulier 100 mbar ou moins, le liquide (18) s'étend dans l'espace intérieur (16) de la cellule liquide (12; 12"; 12‴) au moins jusque dans la zone de pompage de liquide (26; 26"; 26‴) de la pompe à liquide (14; 14"; 14‴), de sorte que cette dernière peut pomper le liquide (18), et dans laquelle la cellule liquide (12; 12"; 12‴) est une cellule électrochimique comportant une électrode de travail (13) et une contre-électrode (15).

2. Tête de manipulateur (10; 10'; 10") selon la revendication 1, dans laquelle la sortie de cellule liquide (22; 22") est disposée dans une région inférieure de la cellule liquide (12; 12"), en particulier en un point le plus bas de l'espace intérieur (16) de la cellule liquide (12; 12"), et dans laquelle la sortie de cellule liquide (22; 22") de la cellule liquide (12; 12") est disposée par rapport à la zone de pompage de liquide (26; 26") de la pompe à liquide (14; 14") avec une distance verticale (d; d'; h") qui est choisie de sorte qu'à une pression absolue inférieure à 600 mbar, de préférence inférieure à 400 mbar, en particulier 100 mbar ou moins, le liquide (18) s'étend dans l'espace intérieur (16) de la cellule liquide (12; 12") au moins jusque dans la zone de pompage de liquide (26; 26") de la pompe à liquide (14; 14") de sorte que cette dernière peut pomper le liquide (18).

3. Tête de manipulateur (10; ...; 10‴) selon la revendication 1 ou 2, dans laquelle un fond de la cellule liquide (12; 12"; 12‴) présente une inclinaison en direction de la sortie de cellule liquide (22; 22"; 22‴) et dans laquelle l'inclinaison est choisie de sorte que le liquide (18) s'écoule en direction de la sortie de cellule liquide (22; 22"; 22‴).

4. Tête de manipulateur (10; ...; 10‴) selon au moins l'une des revendications 1 à 3, dans laquelle la pompe à liquide (14; 14"; 14‴) comporte une pompe volumétrique, en particulier une pompe péristaltique.

5. Tête de manipulateur (10; ...; 10‴) selon au moins l'une des revendications 1 à 4, dans laquelle l'électrode de travail (13) est disposée avec une inclinaison par rapport à une surface de liquide dans la cellule électrochimique (12; 12"; 12'''), laquelle est choisie de sorte qu'une première partie (23) de l'électrode de travail (13) peut faire saillie hors du liquide (18) pendant le fonctionnement, qu'une deuxième partie (23") de l'électrode de travail (13) peut être mouillée par le liquide (18) et qu'une troisième partie (23") de l'électrode de travail (13) peut être située à l'intérieur du liquide (18).

6. Manipulateur (60) avec un espace intérieur de manipulateur (62) qui est configuré pour être raccordé hermétiquement à une enceinte à vide (70), dans lequel le manipulateur (60) comporte une tige mobile (64) avec une extrémité distale (65) qui peut être déplacée dans une cavité (72) de l'enceinte à vide (70) lorsque le manipulateur (60) est raccordé à l'enceinte à vide (70), dans lequel l'extrémité distale (65) de la tige mobile (64) comporte la tête de manipulateur (10) selon au moins l'une des revendications 1 à 5, de sorte que la tête de manipulateur (10) est disposée dans la cavité (72) de l'enceinte à vide (70) lorsque le manipulateur (60) est raccordé à l'enceinte à vide (70).

7. Système à vide (100; 100"), comprenant:

   - une enceinte à vide (70) pour enclore hermétiquement une première cavité (72) à une pression négative et
   - une tête de manipulateur (10; ...; 10''') selon au moins l'une des revendications 1 à 5.

8. Système à vide (100) comprenant:

   - une enceinte à vide (70) pour enclore hermétiquement une première cavité (72) à une pression négative et
   - un manipulateur (60) selon la revendication 6.

9. Système à vide (100; 100") selon la revendication 7 ou 8, comprenant:

   - un système d'illumination (80) configuré pour illuminer la cellule liquide (12; 12"; 12''') avec des particules ou un rayonnement (X) et
   - un système de détection (90) configuré pour recevoir des particules (p) ou un rayonnement émis depuis la cellule liquide (12; 12"; 12''').

10. Procédé de fabrication d'une tête de manipulateur (600), comprenant les étapes:

    - fournir une cellule liquide avec une sortie de cellule liquide et un espace intérieur configuré pour une pression négative, qui est configuré pour recevoir un liquide (602), dans lequel la cellule liquide est une cellule électrochimique comportant une électrode de travail et une contre-électrode,
    - fournir une pompe à liquide qui comporte une zone de pompage de liquide en communication fluidique avec la sortie de cellule liquide et qui est configurée pour pomper le liquide depuis la zone de pompage de liquide lorsqu'il y a une pression négative dans l'espace intérieur de la cellule liquide (604), et
    - choisir une distance entre la sortie de cellule liquide de la cellule liquide et la zone de pompage de liquide de la pompe à liquide de sorte qu'à une pression absolue inférieure à 600 mbar, de préférence inférieure à 400 mbar, en particulier 100 mbar ou moins, le liquide s'étend dans l'espace intérieur de la cellule liquide au moins jusque dans la zone de pompage de liquide de la pompe à liquide de sorte que cette dernière peut pomper le liquide (606).

11. Procédé de fonctionnement du système à vide (500) selon la revendication 9, comprenant les étapes:

    - générer une pression absolue inférieure à 600 mbar, de préférence inférieure à 400 mbar, en particulier 100 mbar ou moins dans l'espace intérieur de la cellule liquide (502),
    - fournir le liquide dans la cellule liquide (504),
    - pomper le liquide depuis la zone de pompage de liquide de la pompe à liquide au moyen de la pompe à liquide de sorte que le liquide est pompé hors de la cellule liquide (506),
    - disposer la cellule liquide, le système d'illumination et le système de détection les uns par rapport aux autres de sorte que la cellule liquide peut être illuminée avec des particules ou un rayonnement depuis le système d'illumination et qu'un rayonnement ou des particules peuvent être reçus par le système de détection (508),
    - illuminer la cellule liquide avec des particules ou un rayonnement depuis le système d'illumination (510) et
    - détecter un rayonnement ou des particules émis depuis la cellule liquide dans le système de détection (512).

12. Procédé selon la revendication 11, comprenant une ou plusieurs des étapes:

    - déplacer et/ou incliner la cellule liquide au moyen du manipulateur afin de disposer la cellule liquide, le système d'illumination et le système de détection les uns par rapport aux autres de telle sorte que la cellule liquide peut être illuminée avec des particules ou un rayonnement depuis le système d'illumination et qu'un rayonnement ou des particules peuvent être reçus par le système de détection,

- fournir le liquide dans la cellule liquide tout en pompant le liquide depuis la zone de pompage de liquide de la pompe à liquide,

- fournir le liquide dans la cellule liquide et pomper le liquide depuis la zone de pompage de liquide de la pompe à liquide de sorte qu'un certain niveau de liquide est maintenu constant à l'intérieur de l'espace intérieur de la cellule liquide,

- fournir le liquide dans la cellule liquide et pomper le liquide depuis la zone de pompage de liquide de la pompe à liquide de sorte que le niveau de liquide à l'intérieur de l'espace intérieur de la cellule liquide est modifié,

- incliner l'électrode de travail de la cellule électrochimique de sorte qu'une première partie de l'électrode de travail peut faire saillie hors du liquide pendant le fonctionnement, qu'une deuxième partie de l'électrode de travail peut être mouillée par le liquide et qu'une troisième partie de l'électrode de travail peut être située à l'intérieur du liquide,

- fournir le liquide dans la cellule électrochimique et pomper le liquide depuis la zone de pompage de liquide de la pompe à liquide de sorte qu'une première partie de l'électrode de travail fait saillie hors du liquide pendant le fonctionnement, qu'une deuxième partie de l'électrode de travail est mouillée par le liquide et qu'une troisième partie de l'électrode de travail est située à l'intérieur du liquide,

- illuminer l'électrode de travail de la cellule électrochimique avec des particules ou un rayonnement depuis le système d'illumination de sorte que la première partie de l'électrode de travail qui fait saillie hors du liquide pendant le fonctionnement, la deuxième partie de l'électrode de travail qui est mouillée par le liquide et la troisième partie de l'électrode de travail qui est située à l'intérieur du liquide sont illuminées l'une après l'autre.

13. Utilisation du système à vide (100; 100") selon la revendication 9 pour:

- une analyse de surface,
- une mesure d'une réaction de surface,
- une mesure de réactions liquide-solide,
- une mesure de réactions liquide-gaz,
- une mesure de liquides,
- une mesure de couches minces,
- une détection de substances étrangères dans des liquides,
- une mesure de photoémission,
- une mesure de spectroscopie photoélectronique à une pression proche de la pression atmosphérique,
- une mesure de spectroscopie de photoélectrons X à une pression proche de la pression atmosphérique,
- une mesure électrochimique,
- une analyse de batterie,
- une mesure d'oxydation,
- une mesure d'électrolyte,
- une mesure d'électrode,
- une mesure d'échantillon à travers un liquide,
- un contrôle de qualité,
- une mesure de corrosion,
- une mesure d'un catalyseur,
- une mesure dépendante de la pression,
- une mesure d'un échantillon biologique,
- une mesure de potentiométrie,
- une mesure d'un liquide sursaturé.

14. Utilisation du procédé (500) selon la revendication 11 ou 12 pour:

- une analyse de surface,
- une mesure d'une réaction de surface,
- une mesure de réactions liquide-solide,
- une mesure de réactions liquide-gaz,
- une mesure de liquides,
- une mesure de couches minces,
- une détection de substances étrangères dans des liquides,
- une mesure de photoémission,
- une mesure de spectroscopie photoélectronique à une pression proche de la pression atmosphérique,
- une mesure de spectroscopie de photoélectrons X à une pression proche de la pression atmosphérique,
- une mesure électrochimique,
- une analyse de batterie,
- une mesure d'oxydation,
- une mesure d'électrolyte,
- une mesure d'électrode,
- une mesure d'échantillon à travers un liquide,
- un contrôle de qualité,
- une mesure de corrosion,
- une mesure d'un catalyseur,
- une mesure dépendante de la pression,
- une mesure d'un échantillon biologique,
- une mesure de potentiométrie,
- une mesure d'un liquide sursaturé.

15. Produit programme d'ordinateur pour faire fonctionner le système à vide selon la revendication 9, dans lequel le produit programme d'ordinateur contient des moyens de code de programme d'ordinateur qui amènent un processeur à exécuter le procédé selon la revendication 11 ou 12, lorsque le produit programme d'ordinateur est exécuté sur le processeur.

FIG 1

FIG 2

FIG 3

FIG 4

500

| | |
|---|---|
| | 502 |

| | |
|---|---|
| | 504 |

| | |
|---|---|
| | 506 |

| | |
|---|---|
| | 508 |

| | |
|---|---|
| | 510 |

| | |
|---|---|
| | 512 |

FIG 5

600

602

604

606

FIG 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0116486 A1

- US 2012234082 A1